# EUROPEAN PATENT APPLICATION

(11) **EP 1 189 146 A1**
(43) Date of publication of application: **20.03.2002**
(21) Application number: 00402520.1
(22) Date of filing: 13.09.2000
(51) Int. Cl.: G06F 17/21, G06F 17/30, G06F 17/22, G06F 17/24

(54) **Method and system for composite site resource generation**

(71) Applicant: iMediation, S.A., 92045 Paris La Defense (FR)
(72) Inventor: Baudu, Regis Jacques, 75018 Paris (FR); Colin, Dominique Michel, 78810 Feucherolles (FR); Cores, Andres, 75016 Paris (FR); Lhospitalier, Denis Rene Marie, 75012 Paris (FR); Sair, Faraj, 92250 La Garenne Colombes (FR)
(74) Representative: Harris, Ian Richard

(57) **Abstract**

Disclosed are computer-implemented methods and systems for generating composite resources of a web site. A request including an identifier of a composite site is received and the identifier used to retrieve a characterization of the composite site. The characterization includes identifiers of component resources that make up the composite site resource as well as the layout in which the components should be assembled to form the composite site resource. Upon identifying the components, this information is passed to a client system that retrieves the component resources, e.g., from across a network. The retrieved components are assembled into the composite site resource at the server side, of a client-server interaction with the end-user. The composite site resource is provided to the end user's client system. An additionally disclosed aspect is where the composite site resources includes an HTML frameset. A further disclosed feature is cooperation between an application for managing generation of composite site resources and a transaction engine through which the end-user browses composite site resources, and which monitors end-user browsing session events. As an additional aspect, the decoupling of composite site generation management from the functionality of the transaction engine allows for each component to be optimized and an overall system deployed in a more scalable and easily distributable manner.

## Description

### FIELD

Features of the invention relate generally to systems for server-side generation of resources in client-server computing and, more particularly, system architectures for generating composite web site resources.

### BACKGROUND

With the recent proliferation of electronic commerce systems, a need has arisen for systems providing a convenient and efficient means for automation and management of business relationships between electronic commerce trading partners.

One desirable functionality, particularly in the context of such systems, is the ability for electronic commerce trading partners to provide prospective customers a set of on-line resources that reflects the particular relationship between the electronic commerce trading partners. For instance, if a merchant with an on-line catalog, partners with several affiliates, the merchant may desire to provide collections of on-line resources to prospective customers that are unique for each affiliate. This will frequently also be desirable for the affiliates, as well. Given its current ubiquity, a world wide web site is a conventional and important platform for providing such collections.

Frequently it is desirable to provide collections of resources that include resources from the web trading partners. Frequently, the web trading partners have invested considerable time and money in developing their own site content and having to recreate content in the context of a partner relationship is inefficient and costly. Keeping with the above example, the merchant with its on-line catalog at its website and the affiliate with its own content, desire to present a collection of resources which are a composite of the merchant's catalog pages and the affiliate's content (possibly with other resources as well). Thus, a solution is needed that provides a means to integrate resources from distinct, arbitrarily located and/or arbitrarily chosen, resource collections to provide a composite resource. It is further desirable for such a means to be amenable to rapid setup to facilitate deployment of collections of composite resources unique to a particular web trading partnership.

With some conventional solutions, set-up of these unique collections can be exceptionally burdensome. In a worst case, in order to provide a composite collection of resources, the collection would have to be specifically-created in a one-off manner. Some conventional solutions do exist which can achieve greater efficiencies than this, however, conventional solutions are still lacking.

One type of related conventional system involves server-side logic that executes to dynamically create resources. Sun Microsystems' JAVA Server Pages and servlets is one example, as is the PHP environment, as are older CGI-based scripts or program. Such systems typically involve the server-side execution of code for the generation of all or a portion of the resource. In such environments, the resource is local to server system, although it may be dynamically generated. An additional feature that can be incorporated with such systems is database connectivity. This allows for results of database queries to be incorporated within resources. These conventional systems do not provide an effective means for incorporating (possibly dynamic) resources maintained on remote hosts, e.g., the merchant and the affiliate, to form a composite resources. Even with database connectivity, such conventional systems still suffer from a database update problem, namely that hosts possibly contributing resources to be used in a composite resource would have to update a central database storing all such possibly-contributing component resources whenever the component resource was altered. Thus there is a need in the art, for a system to exist that provides an effective means to incorporate arbitrarily-chosen and arbitrarily located component resources.

Another conventional solution overcomes some of the problems noted above, but creates others. This solution involves having a monolithic software architecture that is responsible both for managing the relationship among the web trading partners and also generating composite resources. Such a system, however, has performance inefficiencies. First, the portion of the application which generates composite resources can impair performance of the system overall. Second, with a monolithic architecture, distribution of the application becomes hampered. It may be desirable, particularly in high-transaction-volume environments, to distribute portions of the application across several operating environments. For instance, a first portion responsible for tracking user interaction and generating event data could be implemented under a different operating system than a second portion responsible for generation of composite resources, depending on the relative strengths of the operating system, e.g., threading package, memory management, security model, etc.

Accordingly, there is a need for methods and systems that conveniently and efficiently generate composite resources including arbitrarily chosen/ arbitrarily located component resources, and further assemble the component resources in accordance with a layout particular to a partner relationship. Still further there is a need for such a means to be decoupled from other application logic to facilitate distributed processing and application modularity.

### SUMMARY

Particular and preferred aspects of the invention are set out in the accompanying independent and dependent claims. Features of the dependent claims may be combined with those of the independent claims as appropriate and in combinations other than those explicitly set out in the claims.

The present invention provides a solution to these and other problems with a method and system for generation of composite site resources. One aspect of the present invention provides computer-controlled methods for generating a composite site resource. An illustrative method includes receiving an identifier of a composite site and retrieving a characterization of the composite site resource responsive to the identifier. The characterization includes a set identifiers for a set of component resources. The method also includes communicating requests to retrieve the set of component resources based on the set of identifiers and receiving the set of component resources. Then, the component resources are assembled in accordance with the characterization for creating the composite site resource. The composite site resource is returned to a requesting system.

In a variation on this method, assembling the resource includes assembling a frameset. The component resources include identifiers of resources of frames of the frameset. This variation also includes receiving requests for the resources of frames of the frameset, retrieving the resources of frames of the frameset; and returning the resources of frames of the frameset.

In another feature, retrieving a characterization of the composite site resource includes submitting a query to a relational database for the characterization; and transforming results from the query from a relational data model to an XML schema.

The characterization of the composite site resource can be static or dynamic. In a further feature, the characterization of the composite site resource is associated with a relationship between a first peer entity and a second peer entity. The characterization of the composite site resource is predetermined by one of the first or second peer entities. In this variation, providing requests for the component resources includes providing a first request for a first component resource to a first sever system associated with the first peer entity, providing a second request for a second component resource to a second sever system associated with the second peer entity.

Yet another illustrative method includes receiving a request for a composite site resource, the request comprising an identifier of a composite site, and requesting a characterization the composite site associated with the identifier. Next, in this method, identifiers of component resources of the composite site resource are received and, the component resources requested based upon the identifiers. This method then includes receiving and returning the component resources, receiving the composite site resource; and providing the composite site resource.

Yet another illustrative method includes receiving a request for a resource from a first client system. The request is received with a first server application and includes an identifier of a composite site. The request is for a composite site resource. The first server system extracts the identifier of the composite site. A message including the identifier of the composite site is communicated to a second server application for requesting the composite site resource. The second server application retrieves a characterization of the composite site resource based on the identifier of the composite site. Component resources from the characterization of the composite site resource are identified and provided to a second client a system. The second client requests the component resources and returns the component resources to the second server application. The second server application assembles the component resources in accordance with the characterization of the composite site for creating the resource associated with the composite site. The composite site resource is returned to the first server application; and the first server application returns the composite resource to the first the first client system.

### BRIEF DESCRIPTION OF THE DRAWINGS

The above and other features, aspects, and advantages of the present invention will become better understood with reference to the following description and accompanying drawings of illustrative embodiments, and appended claims, where:
Fig. 1 depcits a flow diagram showing high-level process flow in a composite site resource generation system with tabular layout;
Fig. 2 depcits a flow diagram showing high-level process flow in a composite site resource generation system with frameset layout;
Fig. 3-1 depicts an HTML table-based composite site definition;
Fig. 3-2 depicts an HTML frame-based composite site definition;
Fig. 4 depicts a composite site schema;
Fig. 5 depicts a flow diagram of the generation of an HTML-table based composite site showing schema references;
Fig. 6 depicts a flow diagram of the generation of an HTML-frame based composite site showing schema references; and
Fig. 7 depicts a process separation in connection with composite site generation.

### DETAILED DESCRIPTION

### OPERATING ENVIRONMENT

In some embodiments, features of the present invention operate in an architecture for administering and managing network-based partner relationship. Such a system is described in the concurrently-filed application entitled "Method and System for Managing Network-based Partner Relationships," attached hereto as **ANNEX A.** In such an architecture, the present invention provides an improved system and method for generating a collection of composite resources (a "Composite Site"). In this context, an end-user interacts with a Composite Site reflecting a particular network-based partner relationship. In an illustrative embodiment, a transactional engine is used for tracking the browsing session of a user to monitor activity in the context of the partner relationship. The resources provided to the client system of the user in the browsing session are composite site resources generated in accordance with the present invention. In another aspect of this embodiment, a characterization of the composite site resources is generated in the connection with establishing the network-based partner relationship.

### DESCRIPTION OF FIGURES

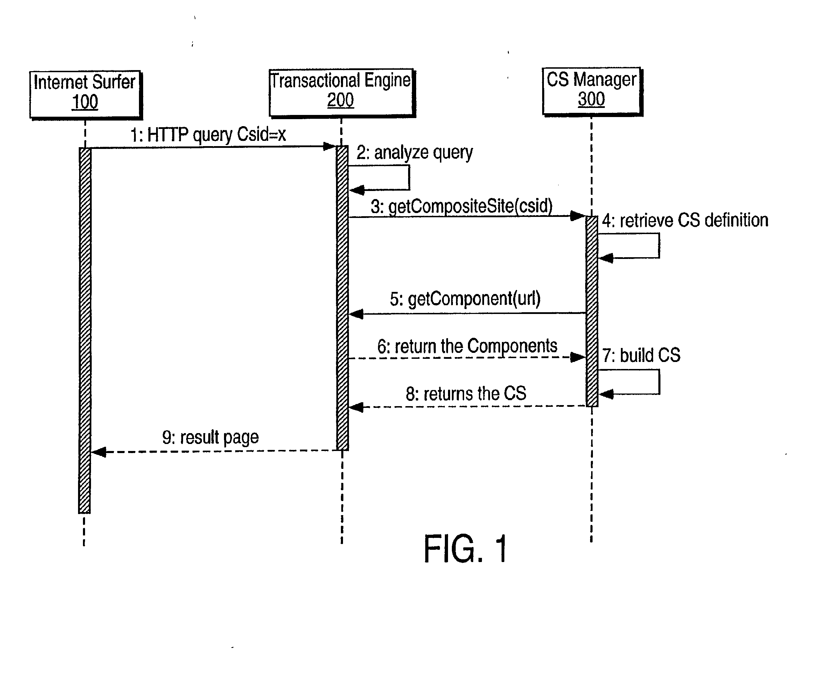

**Fig. 1** depicts a high-level flow diagram of an illustrative embodiment of a composite site resource generation system for generation of a composite site with an HTML table layout. Process flow initiates where a user operating a client system "internet surfer **100**" provides a request **1** comprising an identifier of a composite site ("csid"). The internet surfer **100** operates client software executing on computing machinery to initiate the request **1** as is known in the art. No particular hardware/software combination is fundamental. Rather, any suitable computing platform, including, for instance, a mobile device, set-top box, internet appliance, or general purpose computer could be used.

A transactional engine **200** receives the request **1**. The transactional engine **200** preferably is a collection of software modules executing on a general purpose computer. The transactional engine **200** performs functions including tracking the browsing session of the internet surfer **100** in connection with a system for managing network-based business relationships. **ANNEX A** of the present disclosure is a concurrently filed patent application illustrates such a system. One skilled in the art will appreciate that features of the present invention are not limited to co-operation with features in system in the above-mentioned patent application. The opposite is true.

The request **1** includes an identifier of a composite site. The transactional engine **200** analyses **2** the request **1**. This involves parsing the request **1** and extracting the identifier of the composite site. In some embodiments, the request is an HTTP Request Message, and the identifier of the composite site is passed in the path portion of a URL. Other techniques available to one skilled in the art could also be used. Next, the transactional engine **200** invokes a method **3** in a composite site manager **300** (sometimes abbreviated CSManager) to retrieve a composite site definition associated with the composite site identifier.

The composite site manager **300** comprises software modules for generating composite site resources. Of note is that, architecturally, the CSManager **300** is completely decoupled from the transactional engine **200.** This decoupling allows optimization of the transactional tracking features of the transactional engine **200** and the composite site generation features of the CSManager **300.** In some embodiments the transactional engine **200** is implemented in a language such as C for relatively high efficiency and the CSManager **300** is implemented in JAVA or other higher level language with increased internetworking functionality. Still further, in embodiments which operate in the context of managing network partner relationships, decoupling of the CSManager **300** from the transactional engine **200** allows those aspects of the logic of the relationship reflected in the composite site to be separated from the transactional engine **200.** This increases scalability of both the CSManager **300** and the transactional engine **200** and facilitates their deployment in a distributed environment. For instance, the CSManager **300** could, in this way, be deployed on a machine remotely disposed from the machine executing the transactional engine **200** (with communication across a network).

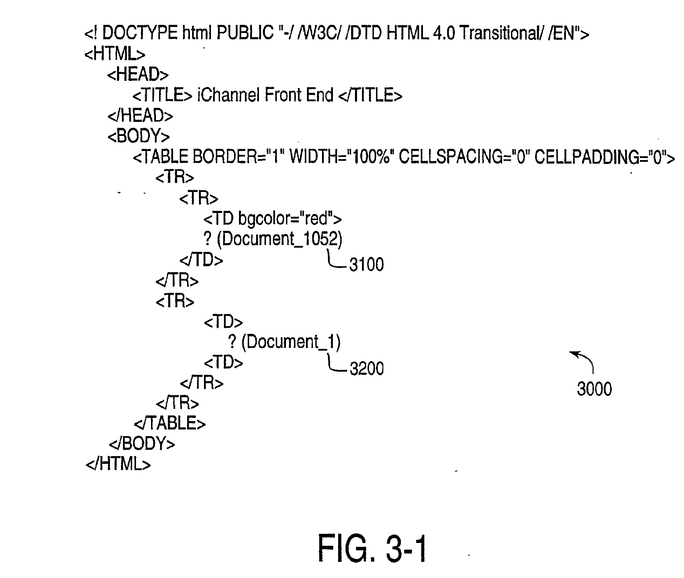

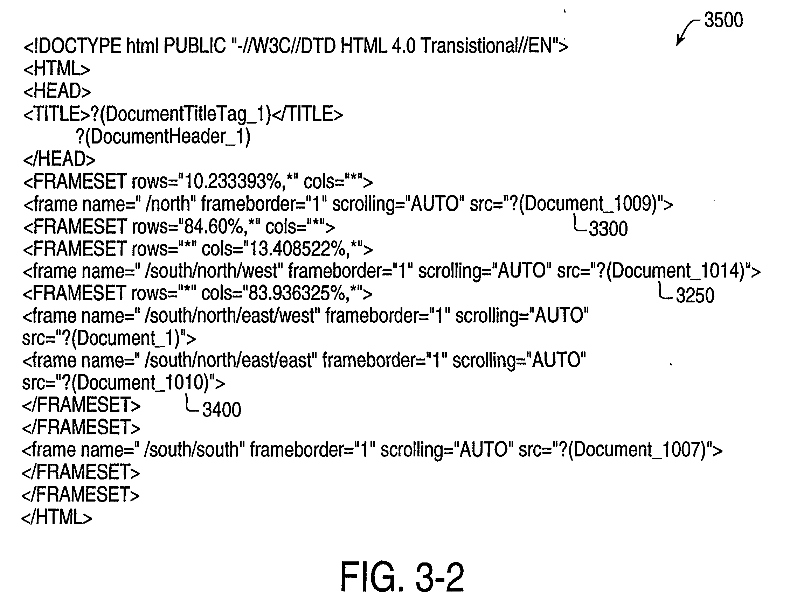

The CSManager **200** retrieves **4** a definition of the composite site from storage (not shown). The composite site definition is described in greater detail below in connection with **Fig. 3-1** and **Fig. 3-2.** Briefly here, the composite site definition comprises identifiers of component resources and other structural information for the composite site resource. In some embodiments, presentation information could also be included. The CSManager **300** extracts the identifiers and provides a component request **5** to the transactional engine **200.** The transactional engine retrieves the component resources and responds **6** to the component request **5** with the component resource. In some embodiments, the transactional engine **200** performs transformative processing on the component resource before responding. The component request-response cycle may be repeated depending on the number of component resources needed to build the composite site resource.

When the CSManager **300** has received the needed component resources, the CSManager **300** builds **7** the composite site resource and returns **8** the composite site resource to the transactional engine **200.** The transactional engine **200** then provides a response **9** to the request **1** of the internet surfer **100.** In some embodiments, the transactional engine **200** performs transformative processing on composite site resource before providing the response **9** to the internet surfer **100.**

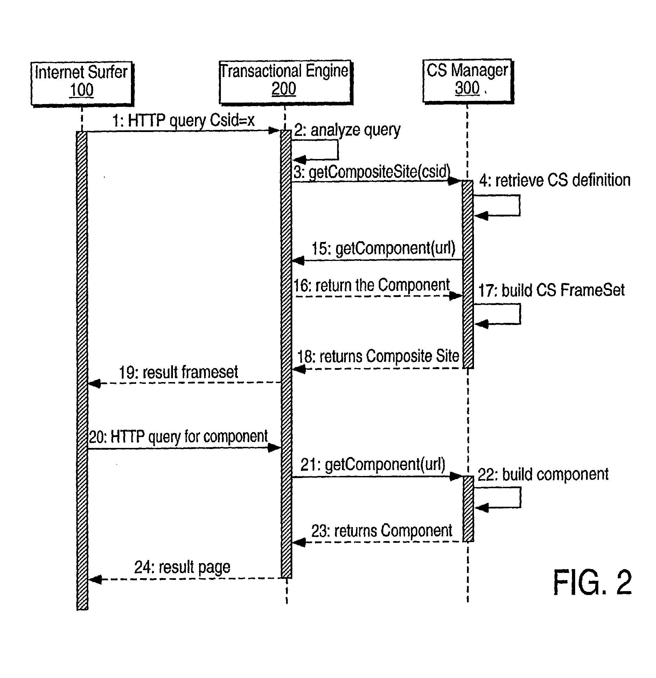

**Fig. 2** depicts a high level flow diagram of an illustrative embodiment of a composite site generation system for generation of a composite site resource with an HTML frame layout. The process flow differs from that described above in connection with **Fig. 1** in that the client system of the internet surfer **100** first receives a frameset and thereafter the component resources associated with each of the frames in the frameset.

Process flow up through where the CSManager **300** retrieves **4** the definition of the composite site is similar to that discussed in connection with **Fig. 1.** However, in this instance the composite site definition includes a frameset as is further described below in connection with **Fig. 3-2.** The composite site definition includes identifiers of component resources. However in this instance, the component resources may themselves be references to other component resources. For instance, in some embodiments a frameset component resource includes a URL to a document. The CSManager **300** initiates a request **15** for the component resource from the composite site definition. The transactional engine **200** returns **16** the URL to the component resource say, a document, as well as the document itself. In some embodiments the URL is rewritten to facilitate tracking of the user's browsing session as is described in greater detail in the above-mentioned disclosure set forth as **ANNEX A**. In some embodiments, the CSManager **300** conveniently caches the component resource to speed retrieval. The above-described request - response cycle is repeated for the component resources identified in the composite site definition. When this completes, the CSManager **300** builds the composite site frameset **17** by appropriately incorporating the URLs into the composite site definition and provides **18** the composite site to the transactional engine **200.**

The transactional engine **200** returns **19** the composite site resource, in this instance the frameset, to the internet surfer **100.** The client system of the internet surfer **100** proceeds conventionally to submit request **20** to the locations of the URLs in the frame set for the associated component resources. The transactional engine **200** provides a request **21** to the CSManager **300** for the component resource; the CSManager **300** builds **22** the component resource, preferably retrieving it from a cache, and returns **23** the component resource to the transactional engine **300.** The transactional engine **200** then provides **24** the component resource to the internet surfer **100.**

In accordance with an illustrative embodiment used in connection with managing a network-based business relationship, the characterization of composite site resource is associated with a relationship between a first peer entity and a second peer entity. The characterization of the composite site resource is predetermined by either the first or second peer entities, or they both could participate in establishing the characterization. Component resources could be requested from server systems operated by both the first and second peer entities when creating the composite site resource.

**Fig. 3-1** depicts an HTML table-based composite site definition **3000** in accordance with an illustrative embodiment. The HTML table-based composite site definition **3000** includes a first component resource identifier **3100** and a second component resource identifier **3200.** The particular syntax or number of component resource identifiers is not fundamental and may vary. Layout techniques are not limited to HTML tables or framesets. In other embodiments, layout elements in cascading style sheets or style languages could be used. More generally, layout techniques available to one skilled in the art and able to be parsed and rendered by the client system of the internet surfer **100** could be used.

**Fig. 3-2** depicts an HTML frame-based composite site definition **3500** in accordance with an illustrative embodiment. The HTML frame-based composite site definition **3500** includes a third component resource identifier **3250,** a fourth component resource identifier **3300,** and a fifth component resource identifier **3400** (as well as others not specifically referenced). The particular syntax or number of component resource identifiers is not fundamental and may vary. As noted above, in the case of the HTML frame-based composite site definition **3500,** component resource identifiers could be replaced by the CSManager **300** with URLs and the browser application of the internet surfer **100** subsequently request the resources associated with the URLs.

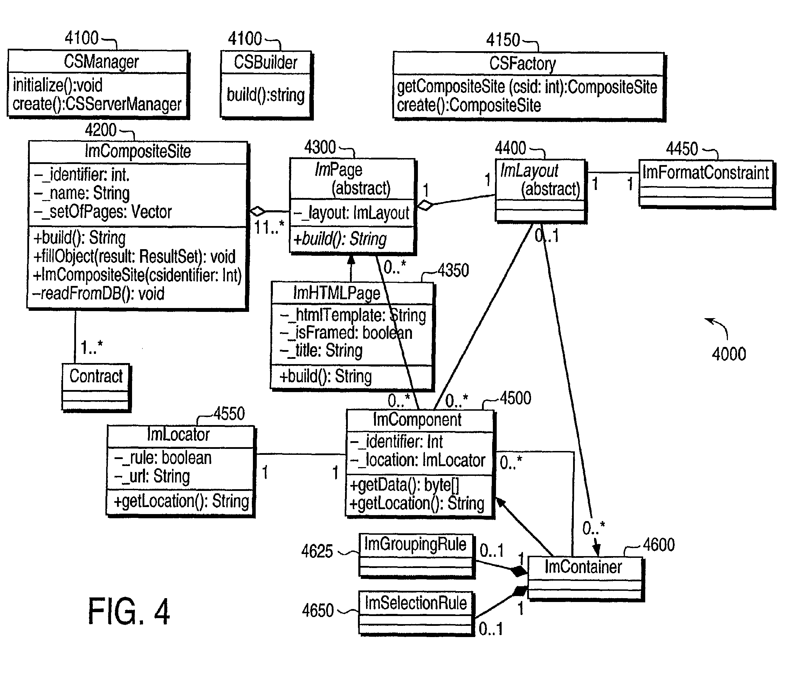

**Fig. 4** depicts a composite site schema **4000** in accordance with an illustrative embodiment. A 'CSManager' class **4100** is the main class of the CSManager **300.** The 'CSManager' class **4100** initializes the CSManager and creates a thread for a server manager handling requests from the transactional engine **200.** A 'CSBuilder' class **4100** performs the function of building the composite site and is decoupled from the communication between the CSManager **300** and the transactional engine **200.** A 'CSFactory' class **4150** creates a new instance of a 'CompositeSite' class **4200** when needed.

The 'CompositeSite' class **4200** represents the composite site definition. In some embodiments, the presentation of the composite site is in HTML, in others it could be in XML and have an accompanying style sheet, in still others it could be a markup language for use with wireless devices, and still other formats could be used.

A composite site resource can have more than one representation; there is no representation definition in the 'CompositeSite' class **4200.** A 'Page' class **4300** defines the representation of the composite site. There is a link to the 'Page' class **4300** from the 'CompositeSite' class **4200.** There, could be different types of the 'Page' class **4300.** In some embodiments, there is only an 'HTMLPage' subclass **4350.** The 'HTMLPage' subclass **4350** is a specialization of the 'Page' class **4300** and represents the page associated with a composite site in an HTML format. The build method of this subclass is responsible for building the composite site with an HTML representation.

An abstract 'Layout' class **4400** provides an association between the different component resources of the composite site and their situation in a page. A 'FormatConstraint' class **4450** is associated with the 'Layout' class **4400.** The 'FormatConstraint' class **4450** represents constraints for a format associated with a Layout. Format constraints for an HTML representation may include, for instance, a FrameBorder, a Scrolling property, a Background Color, a Resizablility property, and a Splitability property. To one Layout different FormatConstraint' classes **4450** could be associated depending on the desired format.

In some embodiments, an 'IComponent' class (not shown) represents common attributes and/or behaviors common to plural component resources. Subclasses having a component resource as their content can then inherent and extend this class. The content of a component resources may have plural representations. The representations may be context dependent and/or format dependent. Preferably, only a single external reference is used to access a component resource, irrespective of representation.

In some embodiments, common attributes include a component resource type, a component resource content, and a component resource external reference. An illustrative embodiment has four primary component resource types: an HTML document, an image, a clickable image―namely a hypertext link for which an image is the anchor―and text.

A 'Component' class **4500** is a super class of the component resources. The 'Component' class **4500** includes an association to a 'Locator' object **4550.** For a static component resource, the location could correspond to the URL; for a dynamic component resource the location of the component could be variable. To the 'Locator' object **4550,** an extraction rule could be associated. This rule determines the location of the component as function of a set of parameters.

A 'Container' class **4600** contains a set of component resources and has an associated 'Grouping Rule' object **4625** and 'Selection Rule' object **4650.** These are for the suggested functions, grouping and selecting among the component resources, respectively.

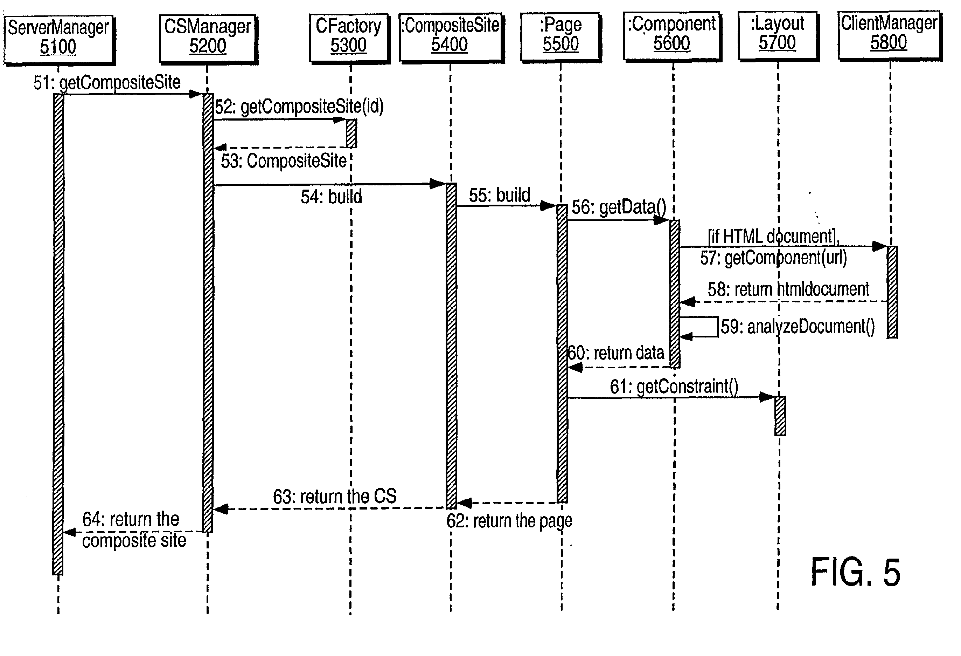

**Fig. 5** depicts a flow diagram of the generation of an HTML-table based composite site showing schema references in accordance with an illustrative embodiment. Process flow initiates in a ServerManager thread **5100** that invokes a getCompositeSite method **51** in a CSManager object **5200.** The CSManager object **5200** invokes a getCompositeSite method **52** in a CFactory object **5300** that takes as its argument an identifier of the composite site for generation. A new Composite Site object **5400** is returned **53** and its build method **54** invoked. Next, a build method **55** is invoked in a Page object **5500** which, in turn, invokes a getData method **56** is an associated component object **5600**.

Assuming the component resource is a document with associated URL, a getComponent message **57** is passed to a client manager **5800** in the transactional engine **200** that fetches and returns the fetched document **59.** An analyzeDocument method **59** executes for parsing the document and the getData method **56** completes with the document data returned **60** to the Page object **5500.**

The 'Page' object **5500** invokes a getConstraint method **61** in a Layout object **5700** in completing execution of the build method **55.** When execution completes the page is returned **62** to the Composite Site instance **5400** that returns the results **63** to the CSManager **5200** that in turn provides the results to the ServerManager thread **5100.**

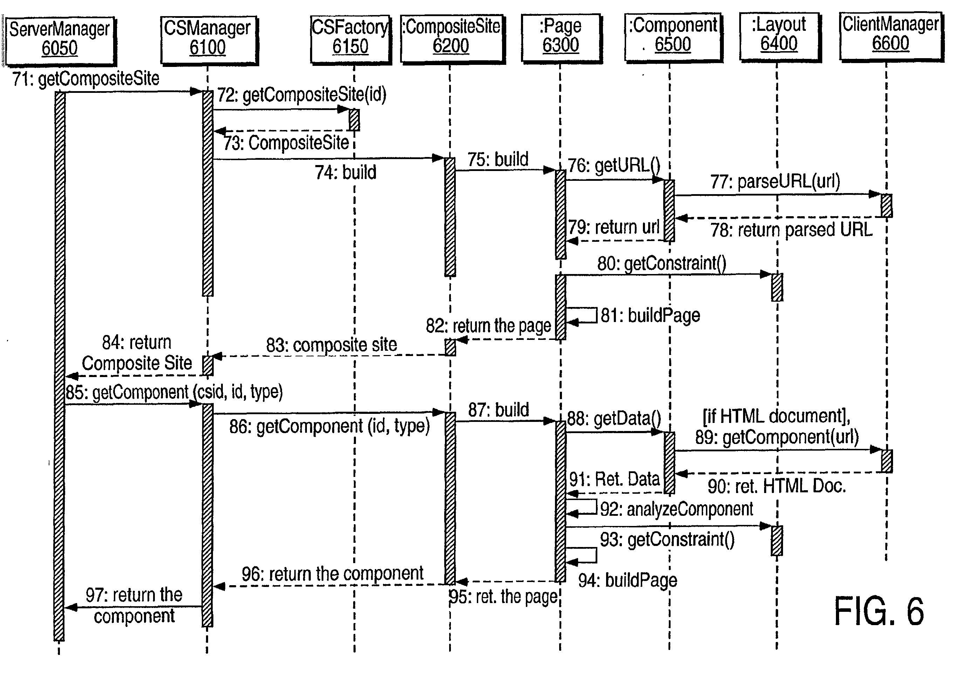

**Fig. 6** depicts a flow diagram of the generation of an HTML-frame based composite site showing schema references in accordance with an illustrative embodiment. Process flow initiates in a ServerManager **6050** that receives a message from the transactional engine **200** for building the composite site. A 'getCompositeSite' message **71** is sent to a CSManager object **6100** that invokes a getCompositeSite method **72** in a CSFactory object **6150** and provides an identifier of the composite site for creation. (Note that, function differences are not implied by different a reference numeral for the CSManager from that in Fig. 1 only clarification when reference is being made in the context of the schema). The CSFactory object **6150** returns **73** a new Composite Site instance **6200** and the CSManager object **6100** invokes a build method **74** in the new Composite Site instance **6200.** A build method **75** is invoked in a page object **6300** that, in turn, invokes a getURL method **76** in a component object **6500** to retrieve the URL (component resource) associated with the page being assembled. The URL is passed along with a parseURL message **77** to a client manager **6600** in the transactional engine **200** that returns **78** the parsed URL **78** and execution of the getURL method **76** completes. The page object **6300** retrieves layout constraints **80** from a layout object **6400** and the builds the composite site page **81** accordingly.

Execution of build method **75** the CompositeSite object **6200** invoked completes and the composite site page is returned **82** and is routed back (steps **83** and **84**) to the browser of the internet surfer **100.**

As **Fig. 6** depicts the situation of a frameset, the browser application conventionally submits requests for the resources associated with each frame of the frameset from the transactional engine **200.** The transactional engine **200** provides messages to the CSManager object **6100** to request the component resources. A getComponent method **85** taking an identifier of the composite site, an identifier of the component resource, and a type of the component resource is invoked in the CSManager object **6100**. The CSManager object **6100**, in turn, invokes a getComponent method **86** in the new Composite Site instance **6200.**

Next, a build method **87** in the page object **6300** invokes a getData method **88** in the component object **6500** to request the component resource data. Assuming for illustration, the component resource is an HTML document, a getComponent message **89** is sent to the client manager **6600** of the transactional engine **200** to retrieve the component resource associated with the particular URL. The transactional engine **200** returns **90** the HTML document component resource and the getData method **88** completes. The page object **6300** parses the component resource **92** retrieves any layout constraints **93** and assembles the composite site page **94.** The page is returned. The build method **87** completes and the component resource continues back to the browser of the internet surfer **100** (in steps **95, 96,** and **97**).

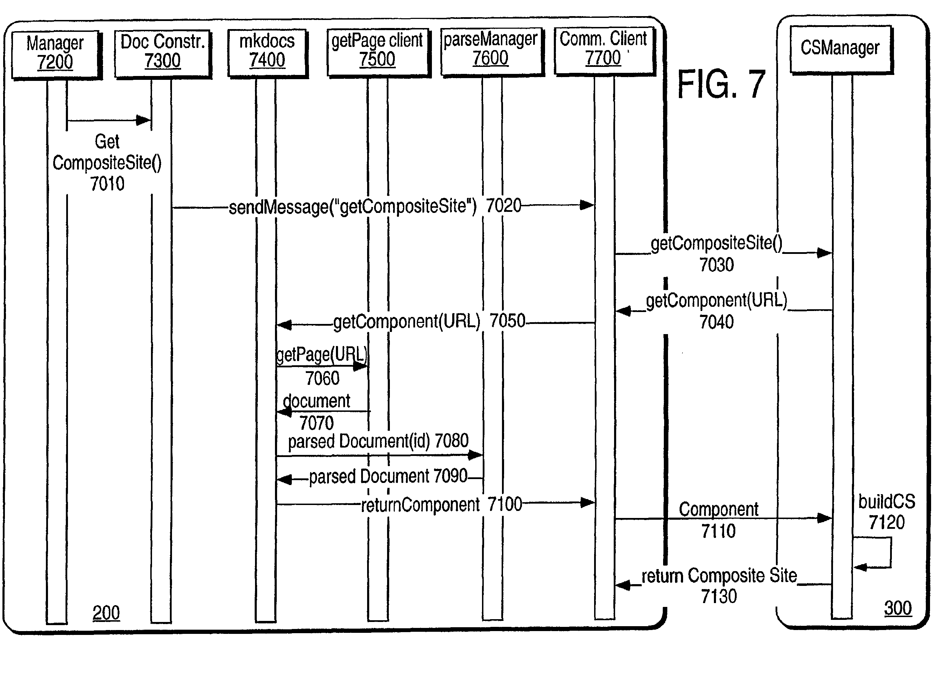

**Fig. 7** depicts a process separation in connection with composite site generation. As noted above, yet another characteristic feature of the present invention lies is the fact that creation of composite site resources can be decoupled from applications and/or services which use the composite that resources. These aspects are illustrated in **Fig. 7** with reference to an illustrative embodiment in which the transactional engine **200** uses the CSManager **300** for the creation of composite site resources.

Process flow initiates when a transactional engine management module **7200** receives a request to provide a composite site resource. The management module **7200** provides a message **7010** to a document construction module **7300.** The document construction module **7300** sends a message **7020** to a communication client **7700** to get the composite site resource.

The communication client **7700** communicates the request to get the composite site resource to the CSManager **300** through a sockets layer. The CSManager **300** executes as has been previously described and submits a request **7030** for component resource **7040** of the composite site. The communication client **7700** provides the request for the component resource **7040** to a mkdocs module that instructs a client application **7500** to get the requested resource **7060.** The client application **7500** returns **7070** the requested resource.

If the document should be parsed, a parsing manager **7600** may receive **7080** the document and return a structure **7090** containing the parsed document. The component resource returns **7100** to the communication client **7700** that provides **7110** the component to the CSManager **300.** The CSManager builds **7120** the composite site resource as has been described above, and returns **7130** the composite site resource to the transactional engine **200.**

It will be apparent from the foregoing that the CSManger **300** is decoupled from the transactional engine **200.** These two software components exchange information but do not depend on each other for their internal operations. When the transactional engine **200** performs functions of monitoring and tracking the browsing session of a user as the user browses composite site resources, decoupling of the CSManager **300** provides substantial benefits. At the simplest level, the CSManager **300** can be implemented on a dedicated system for improved efficiency, security, or scalability. In addition, this decoupling allows the transactional engine **200** to be optimized for tracking the browsing session.

Although the present invention has been described in terms of features illustrative embodiments, one skilled in the art will understand that various modifications and alterations may be made without departing from the scope of the invention. Accordingly, the scope of the invention is not to be limited to the particular embodiments discussed herein, but should be defined only by the allowed claims and equivalents thereof.

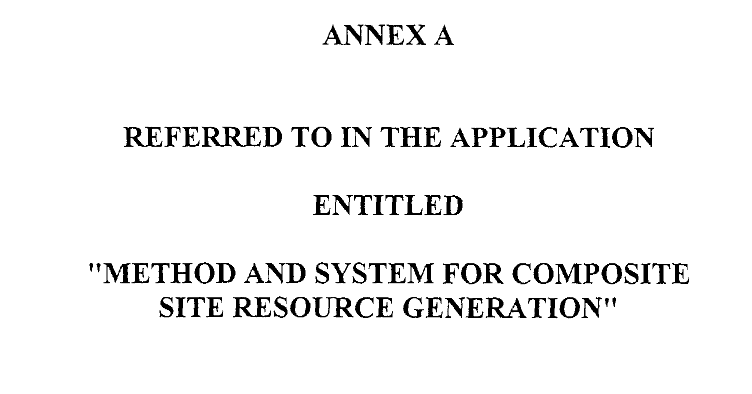

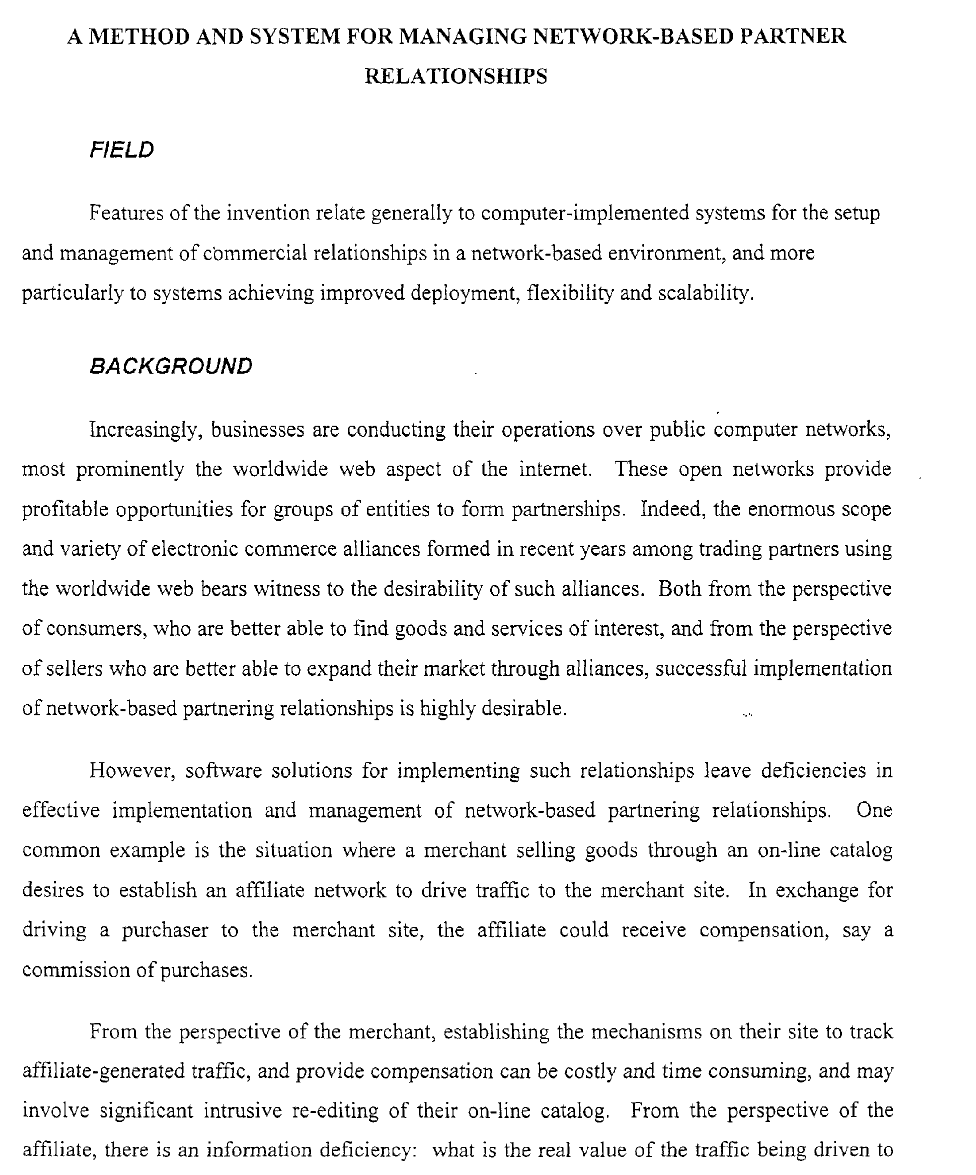

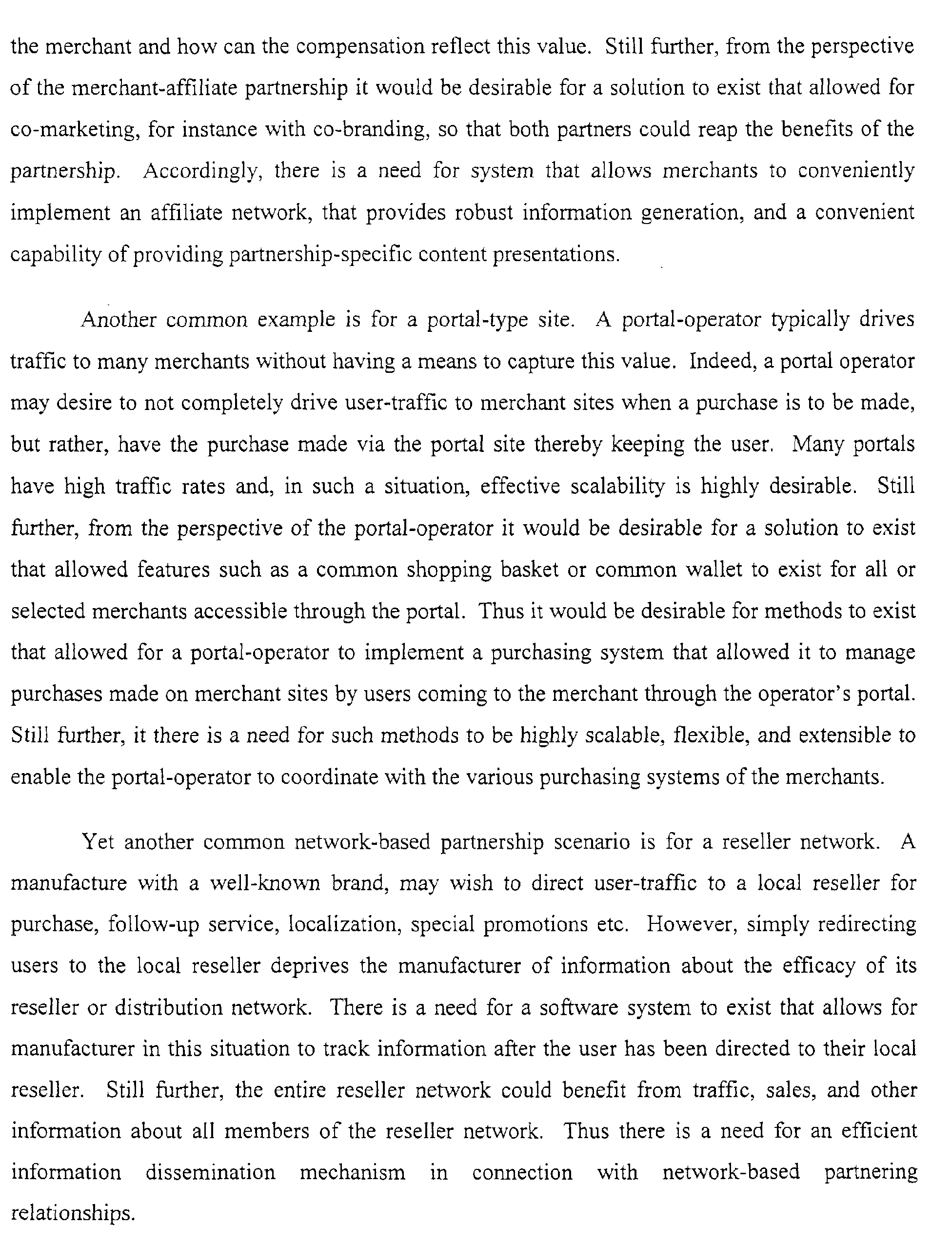

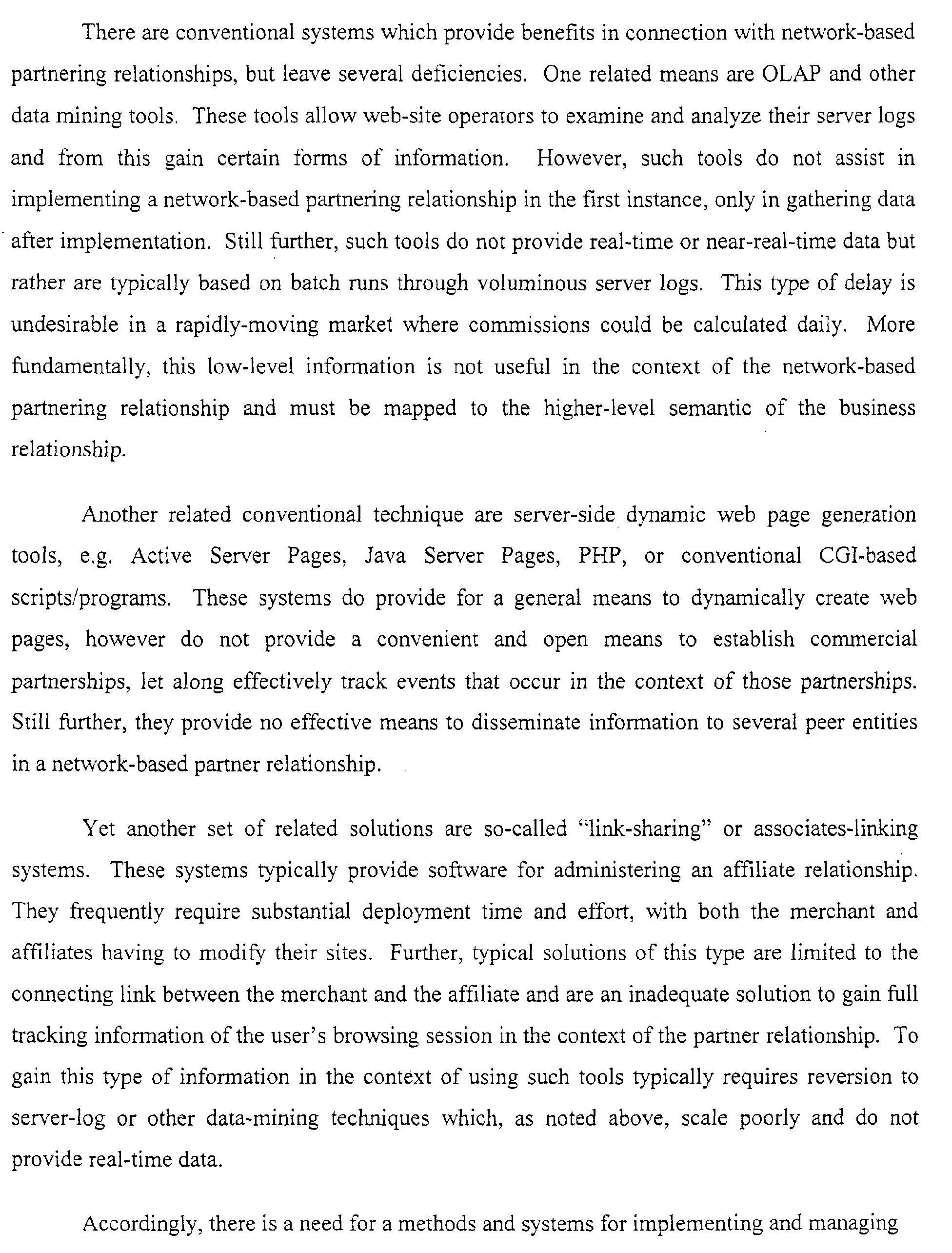

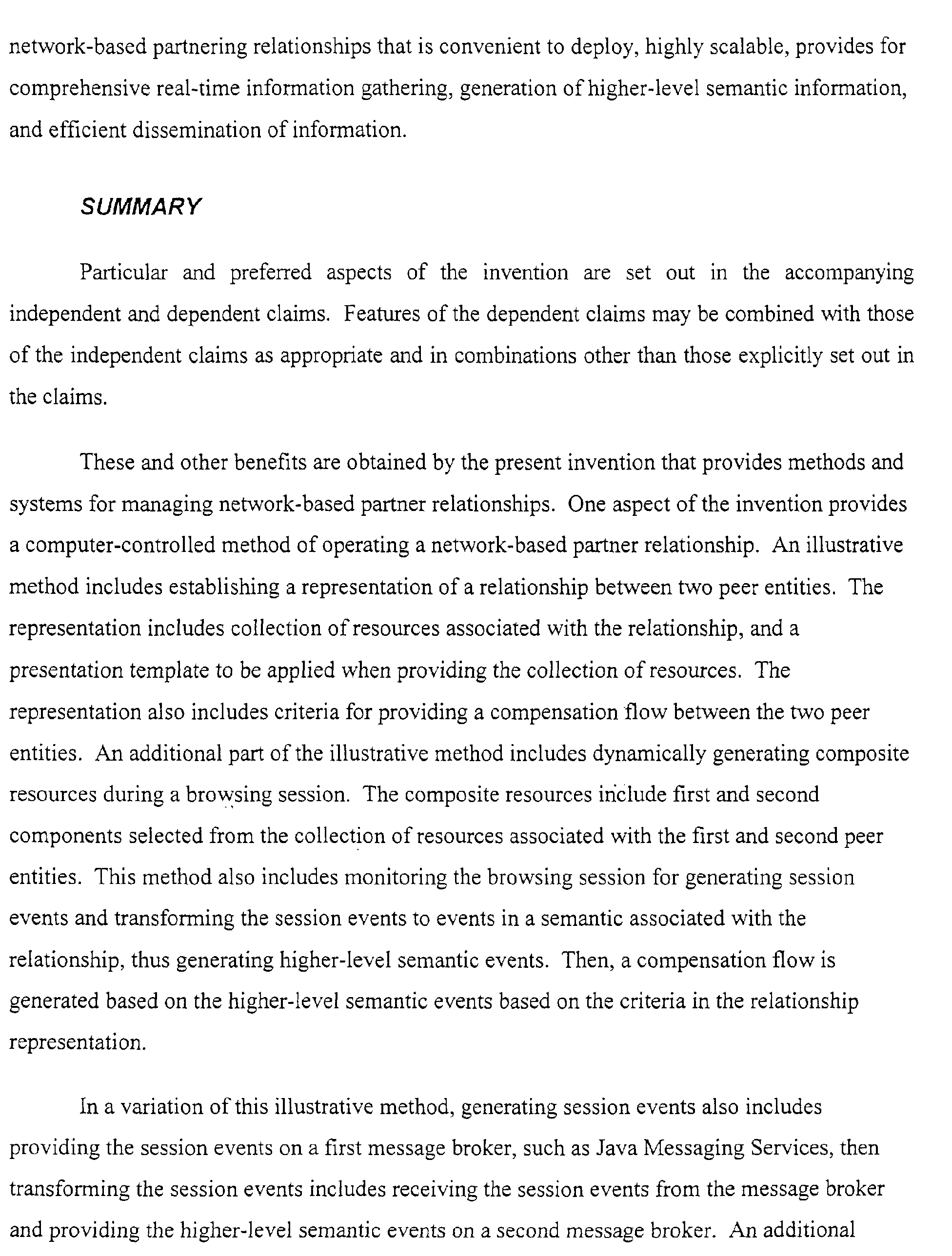

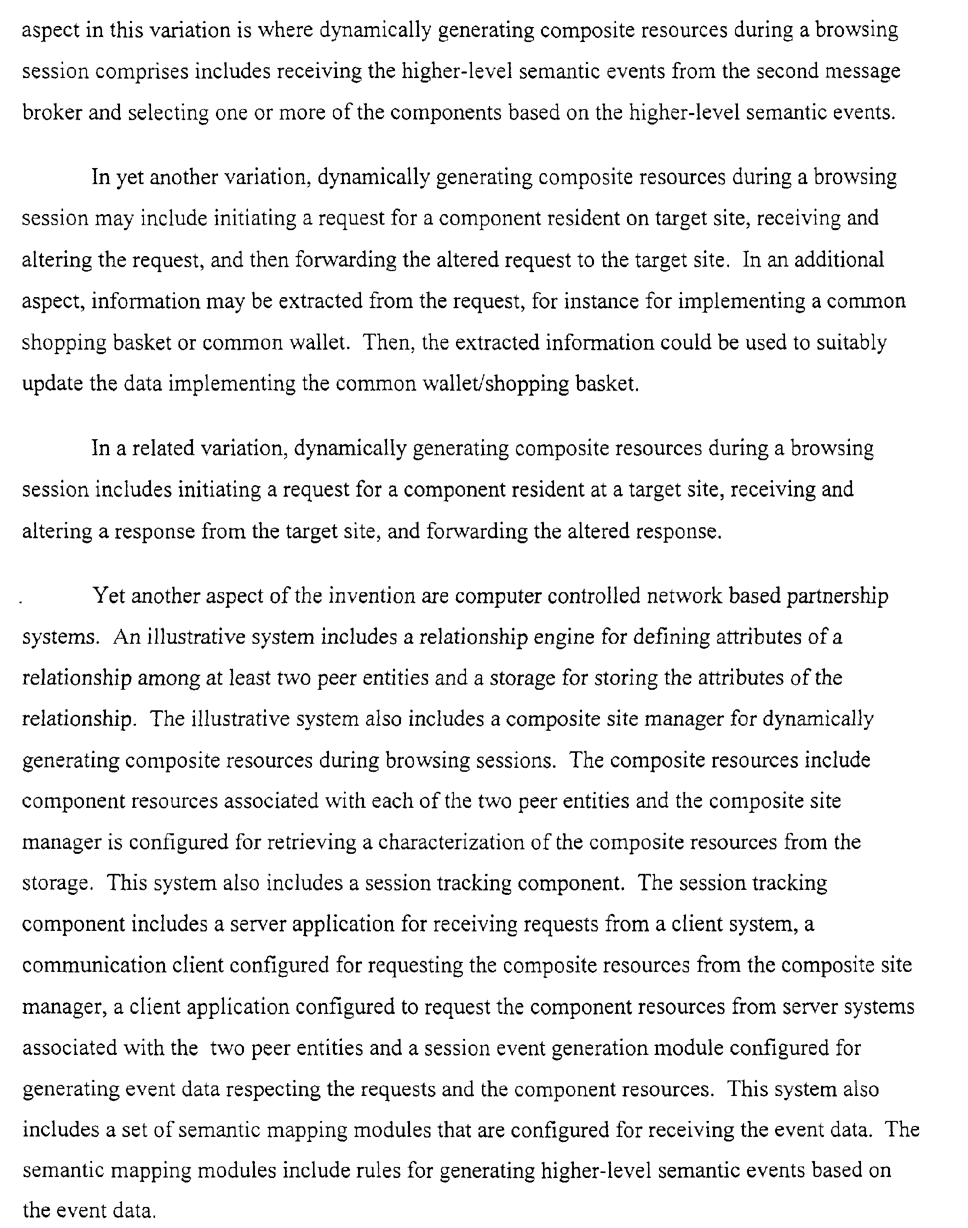

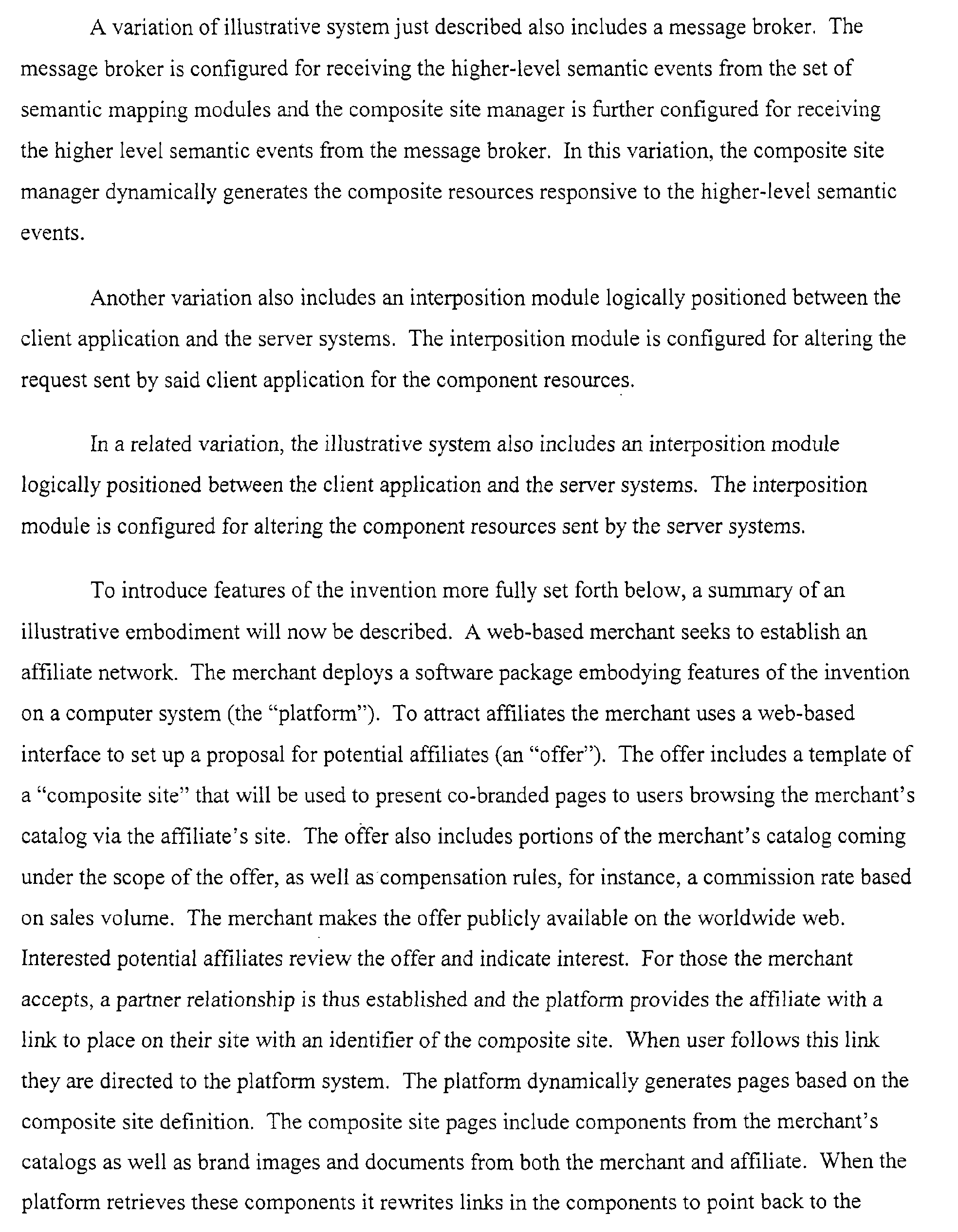

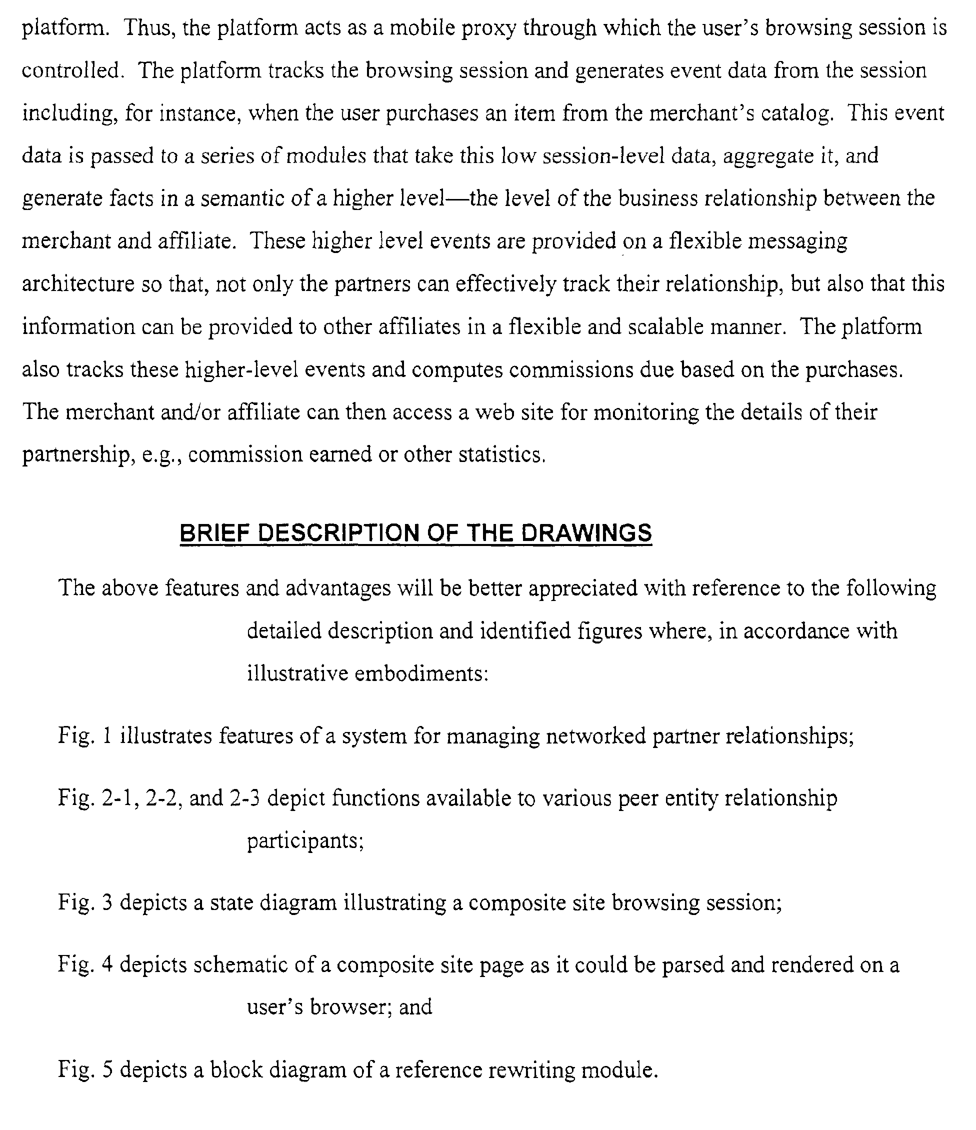

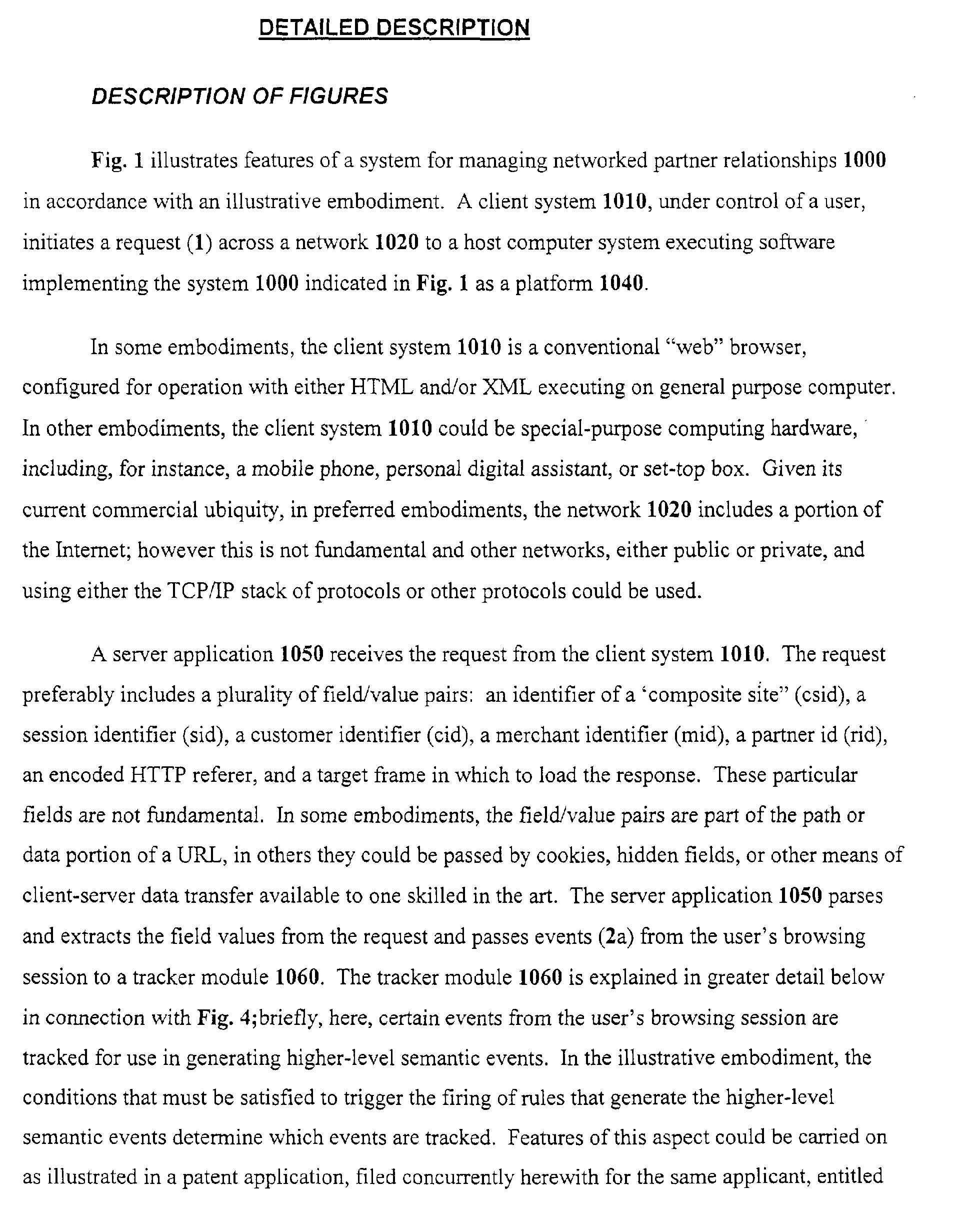

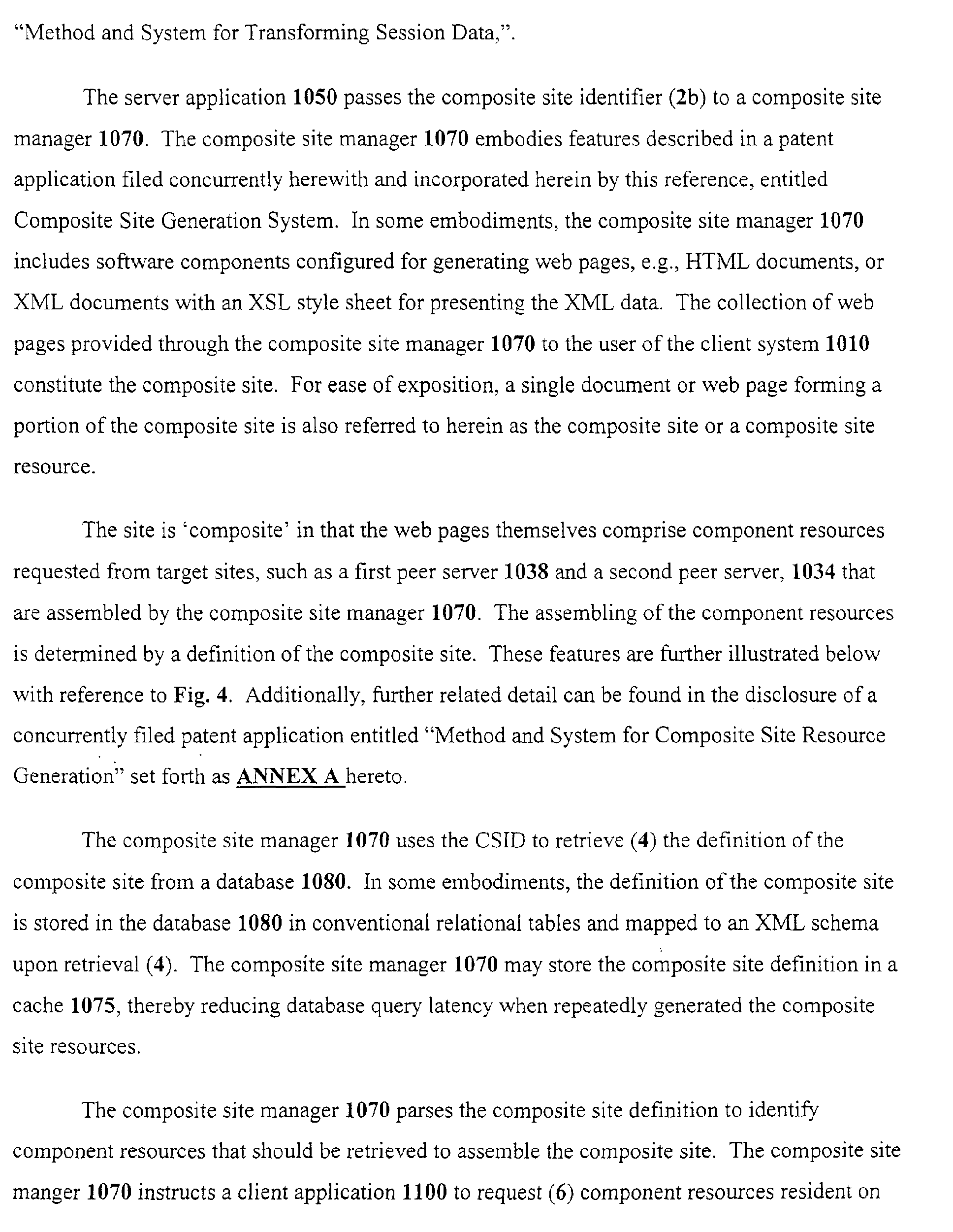

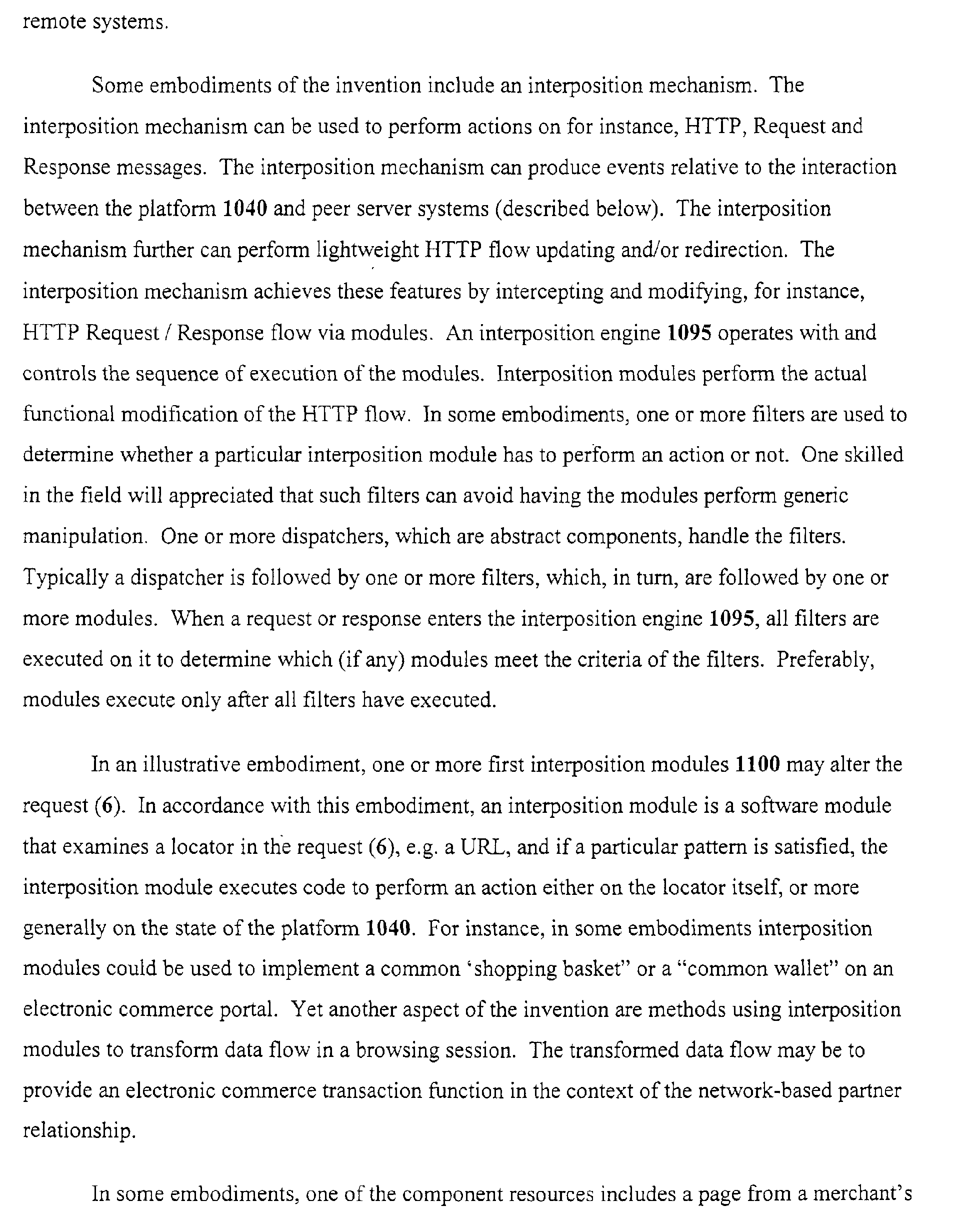

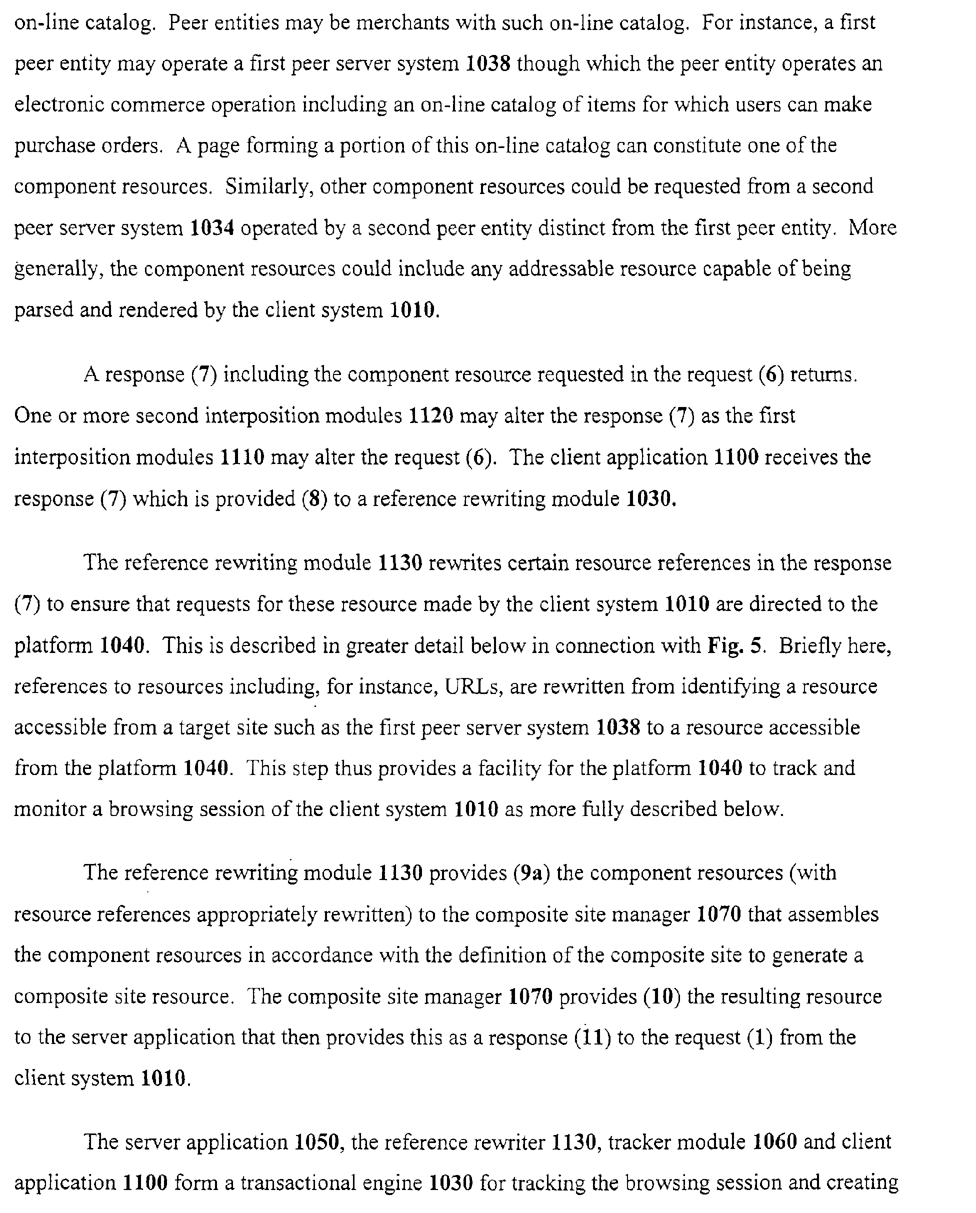

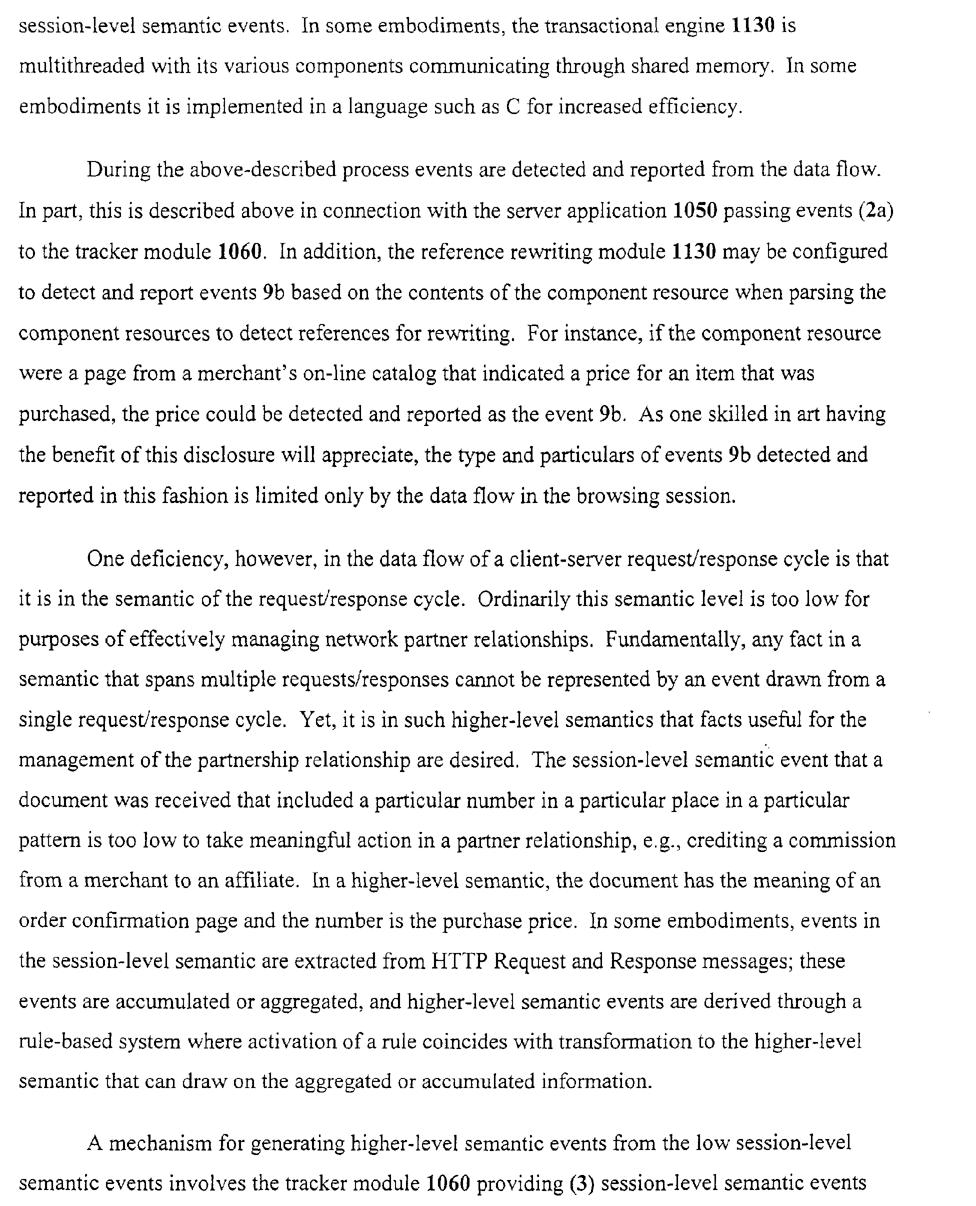

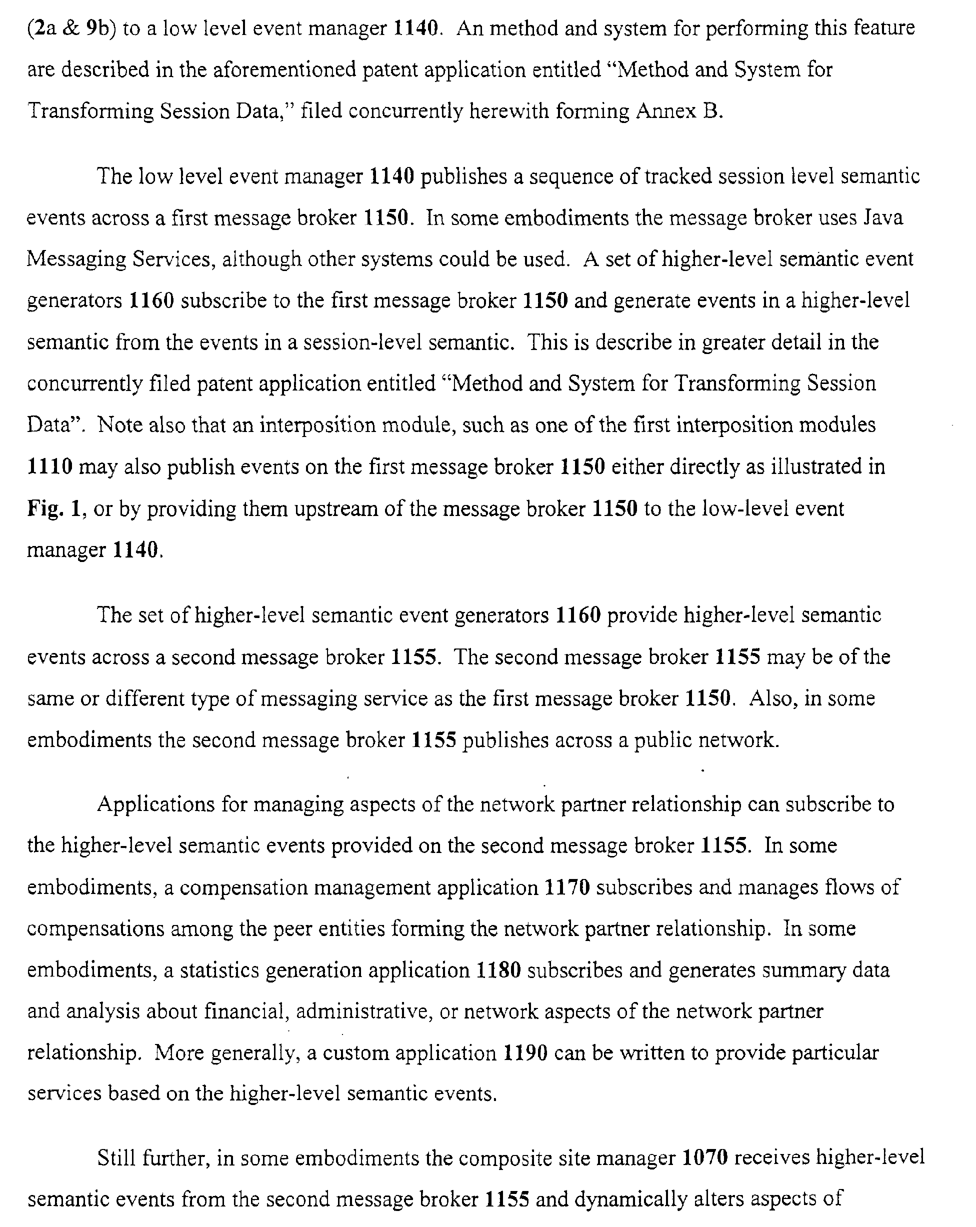

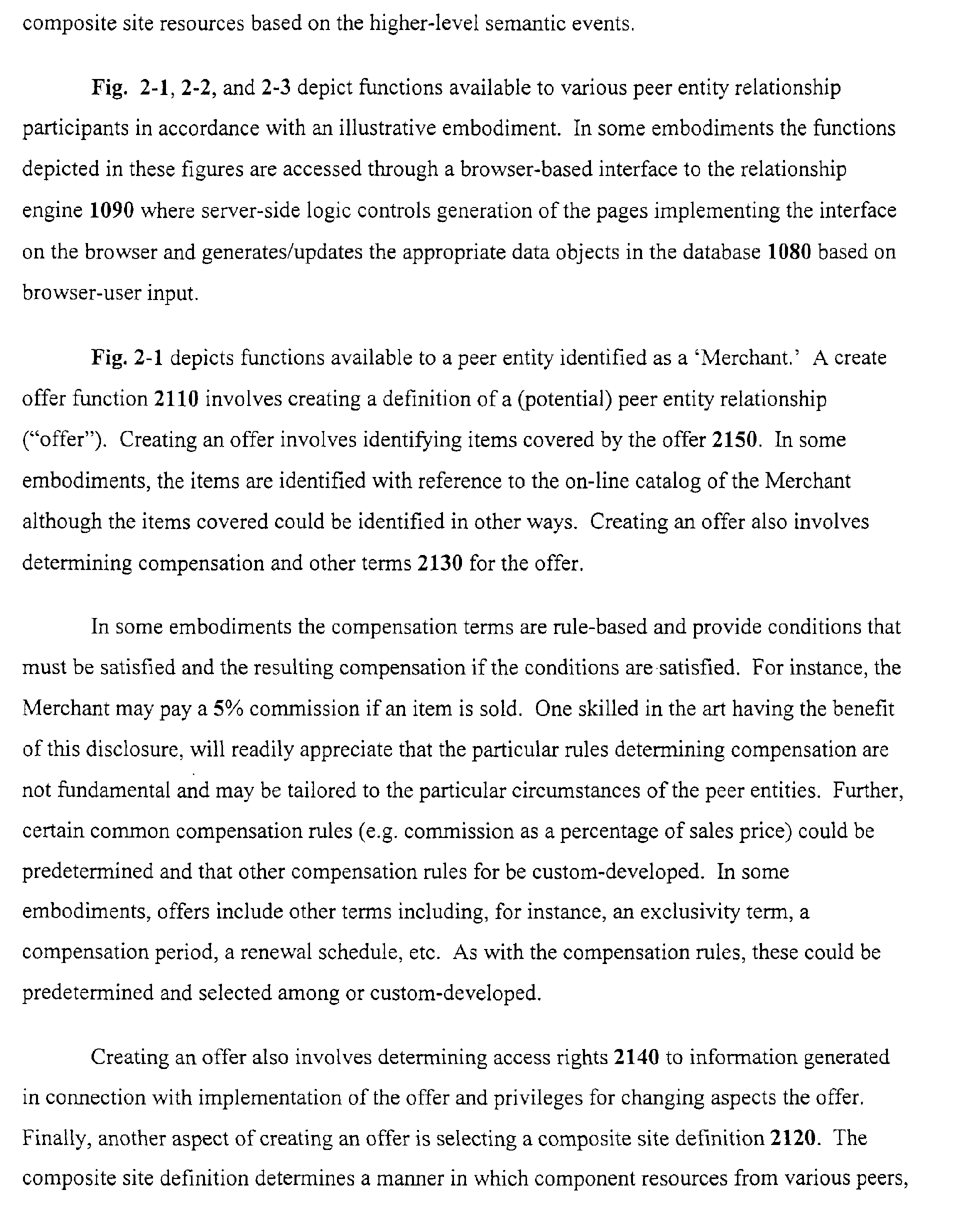

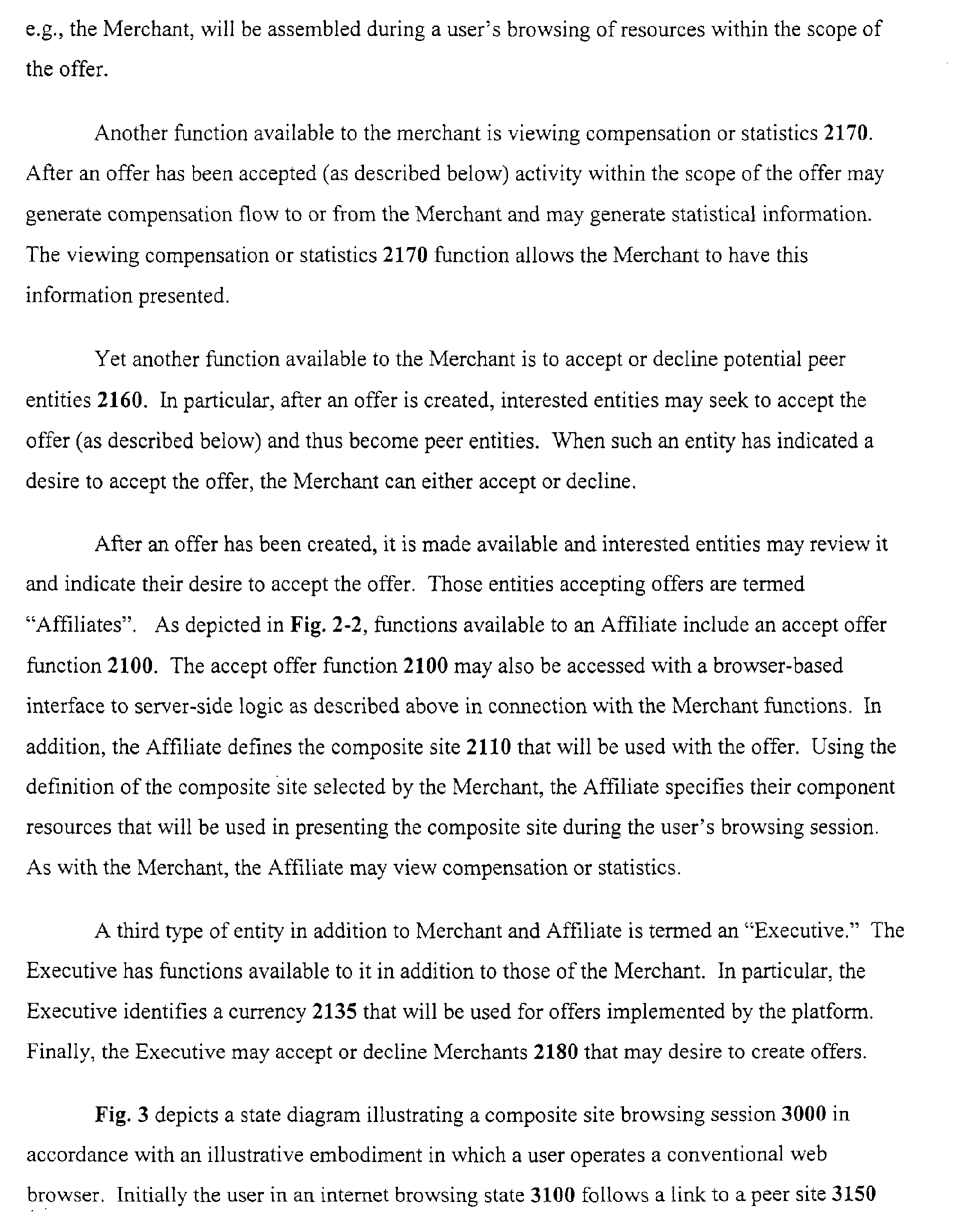

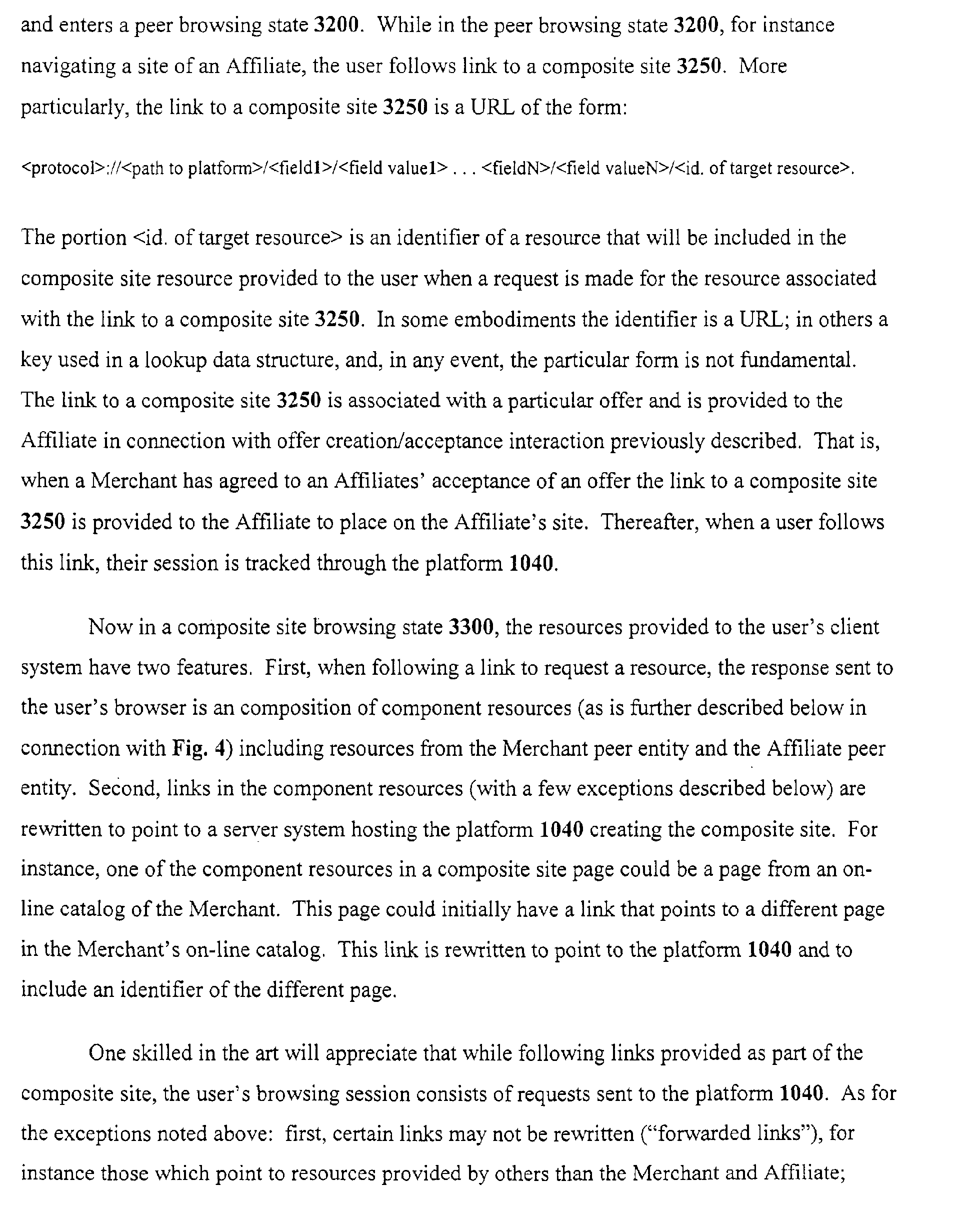

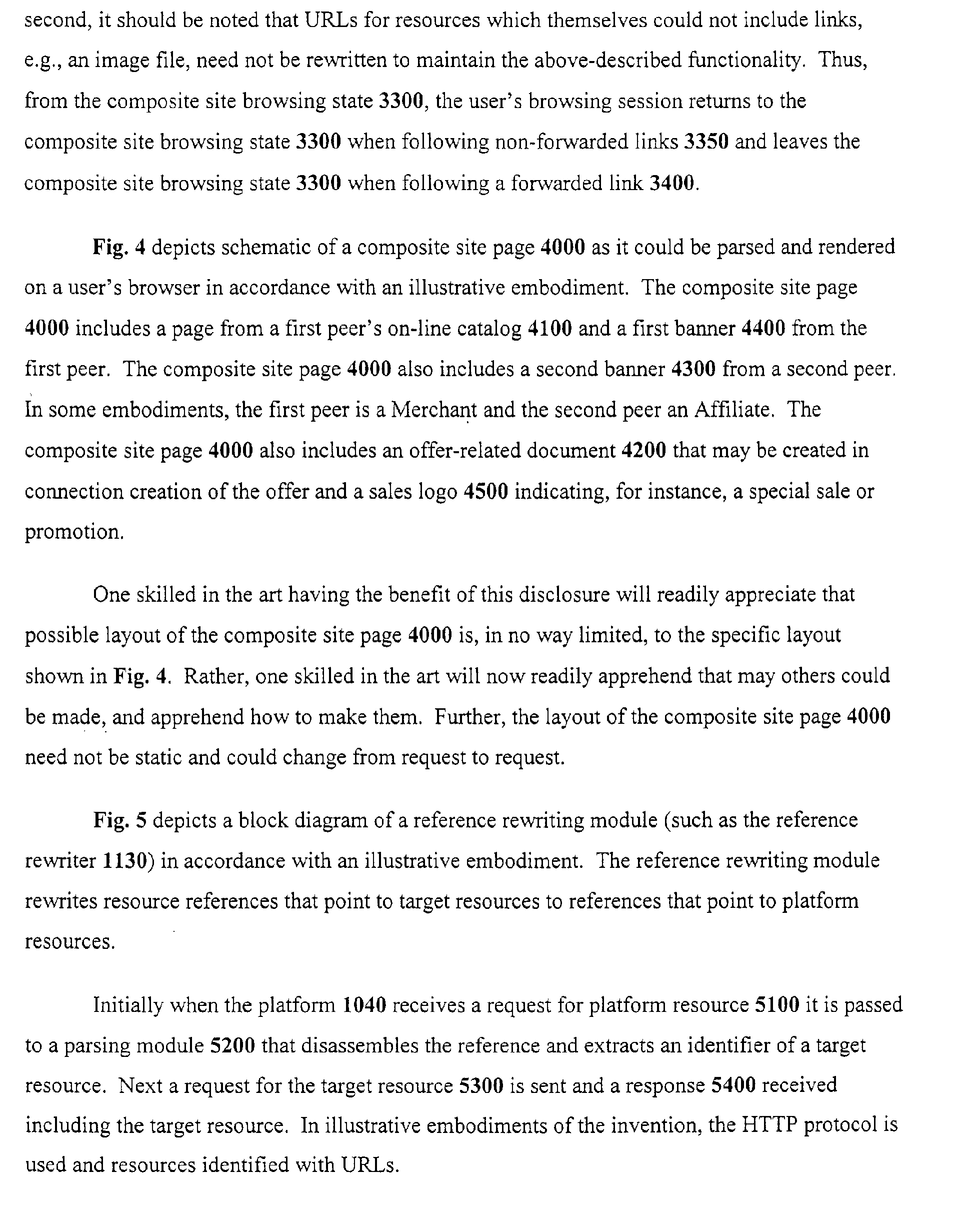

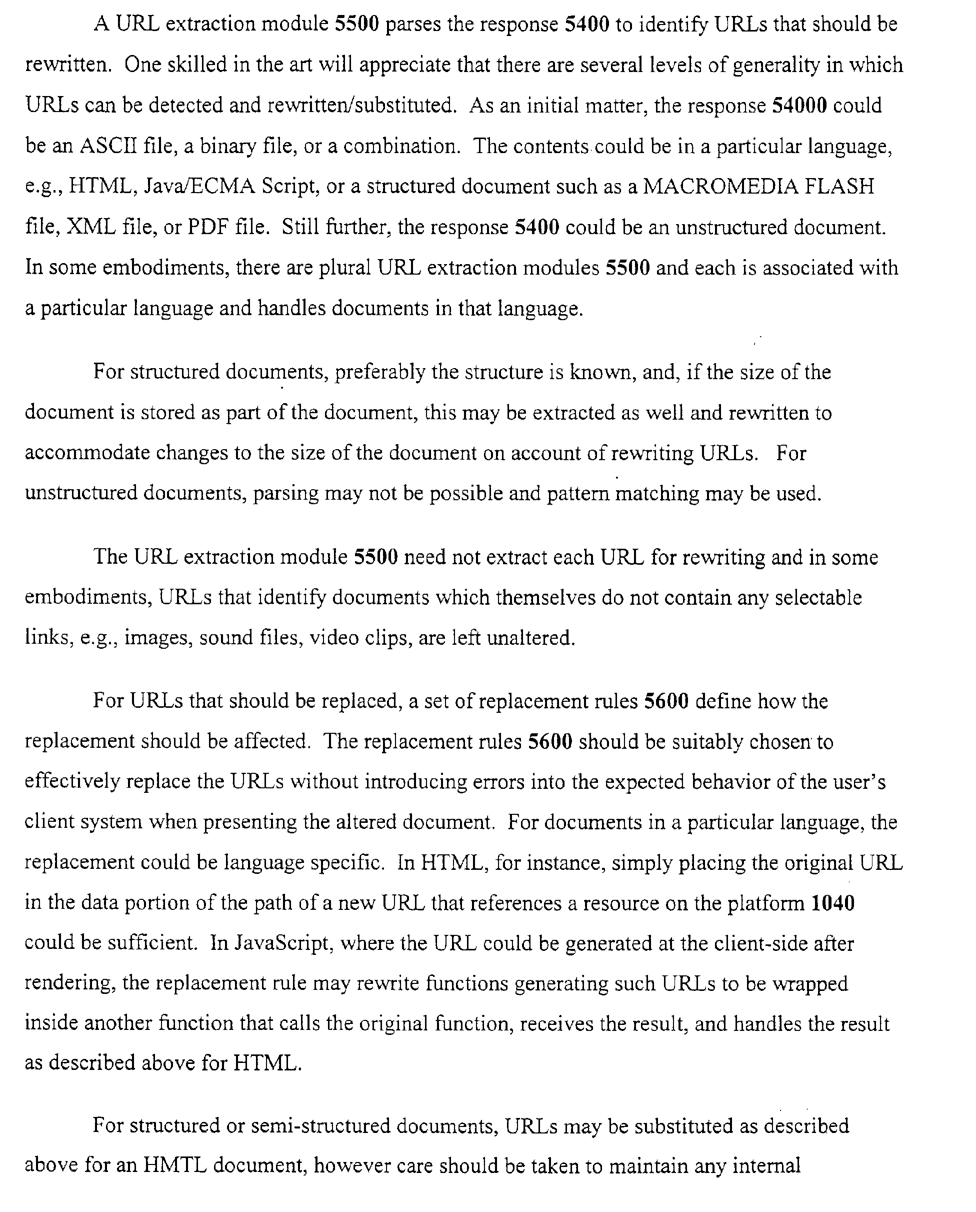

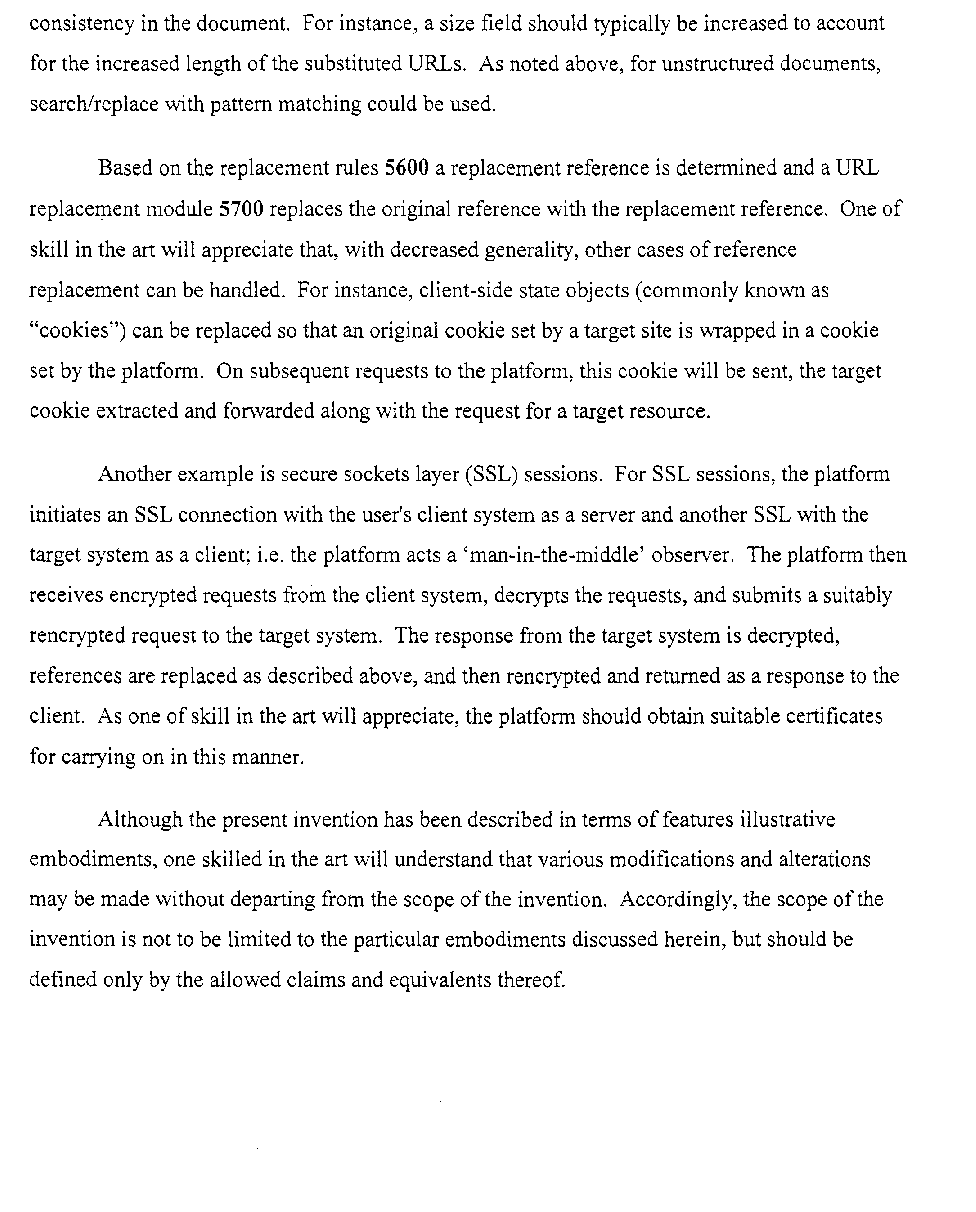

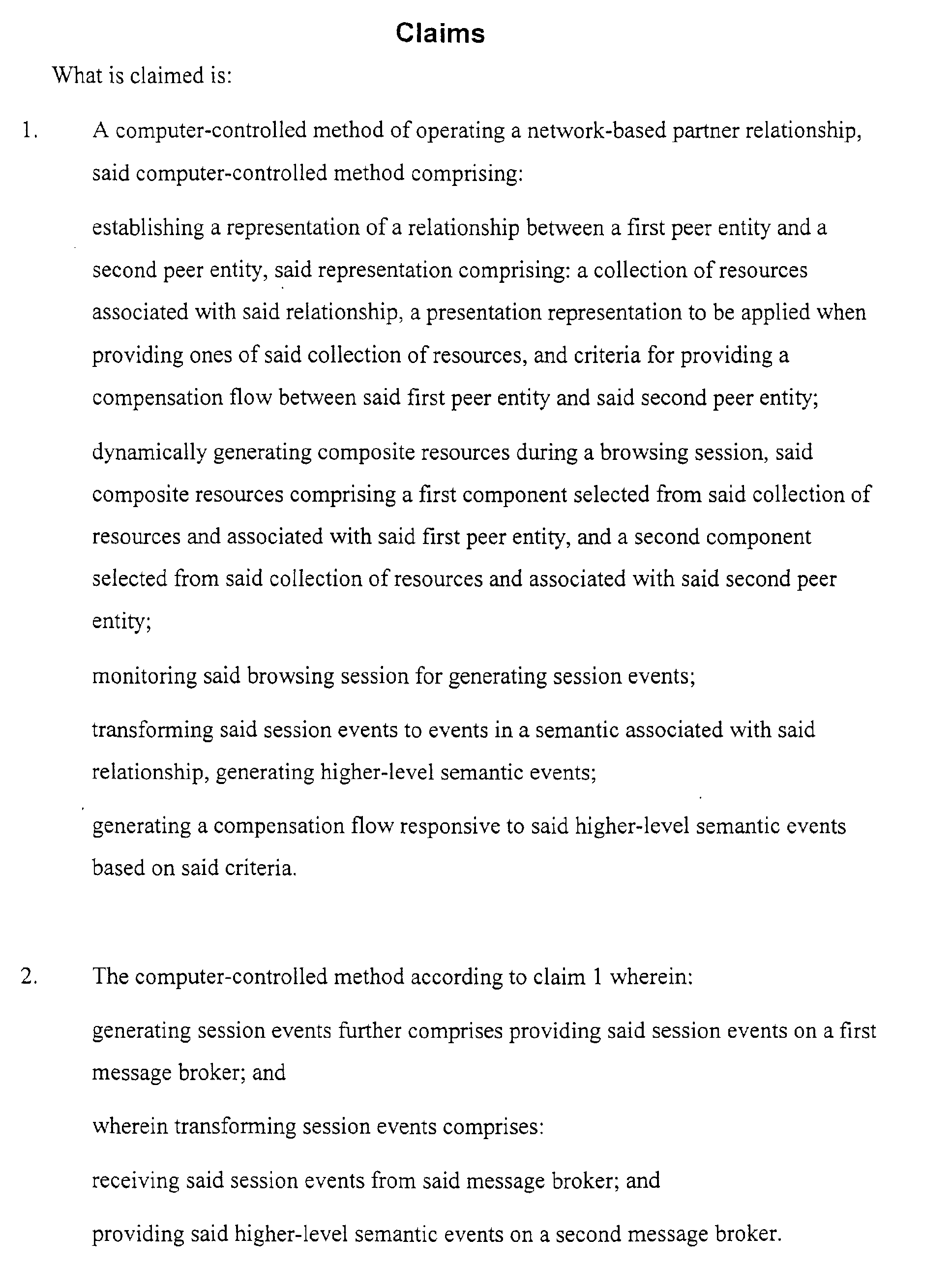

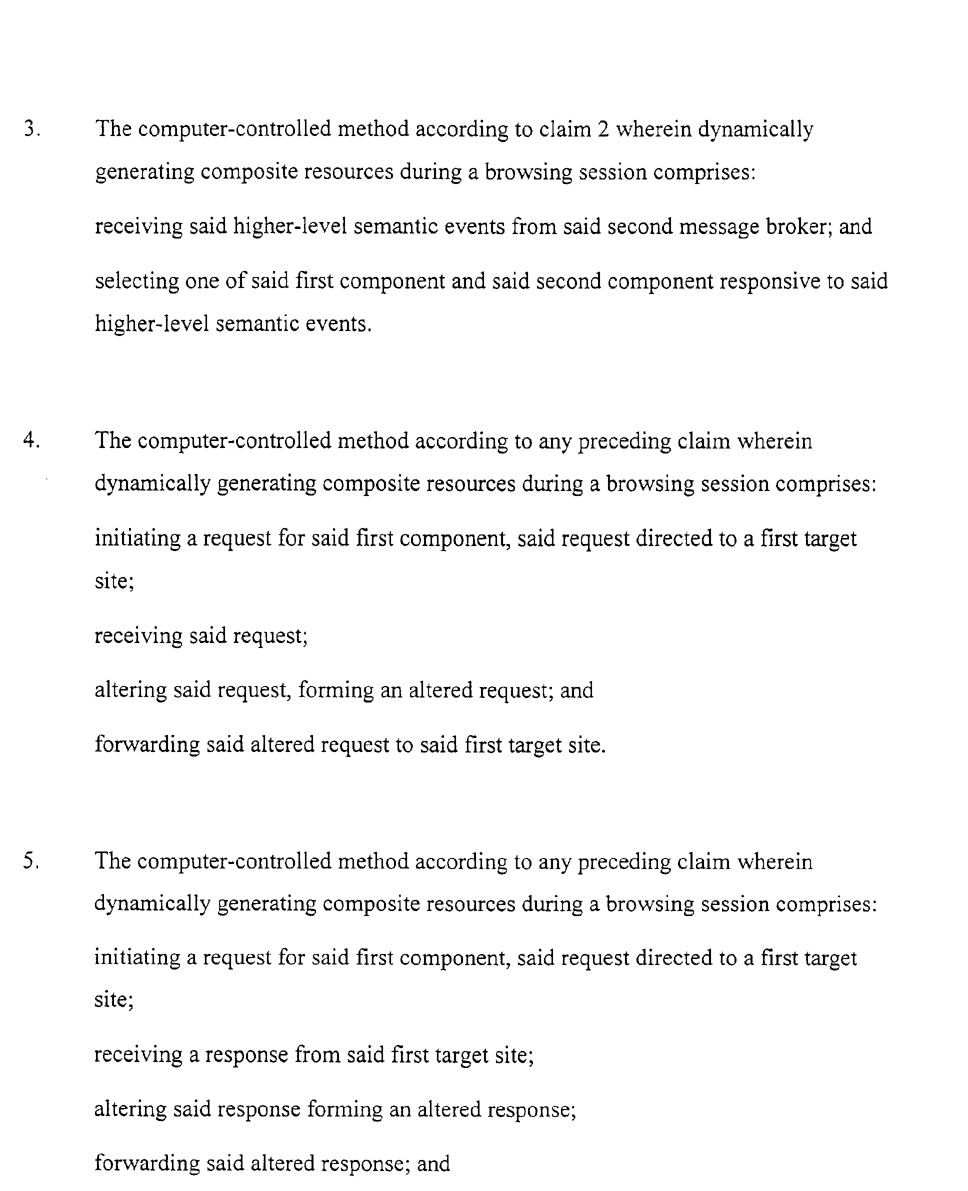

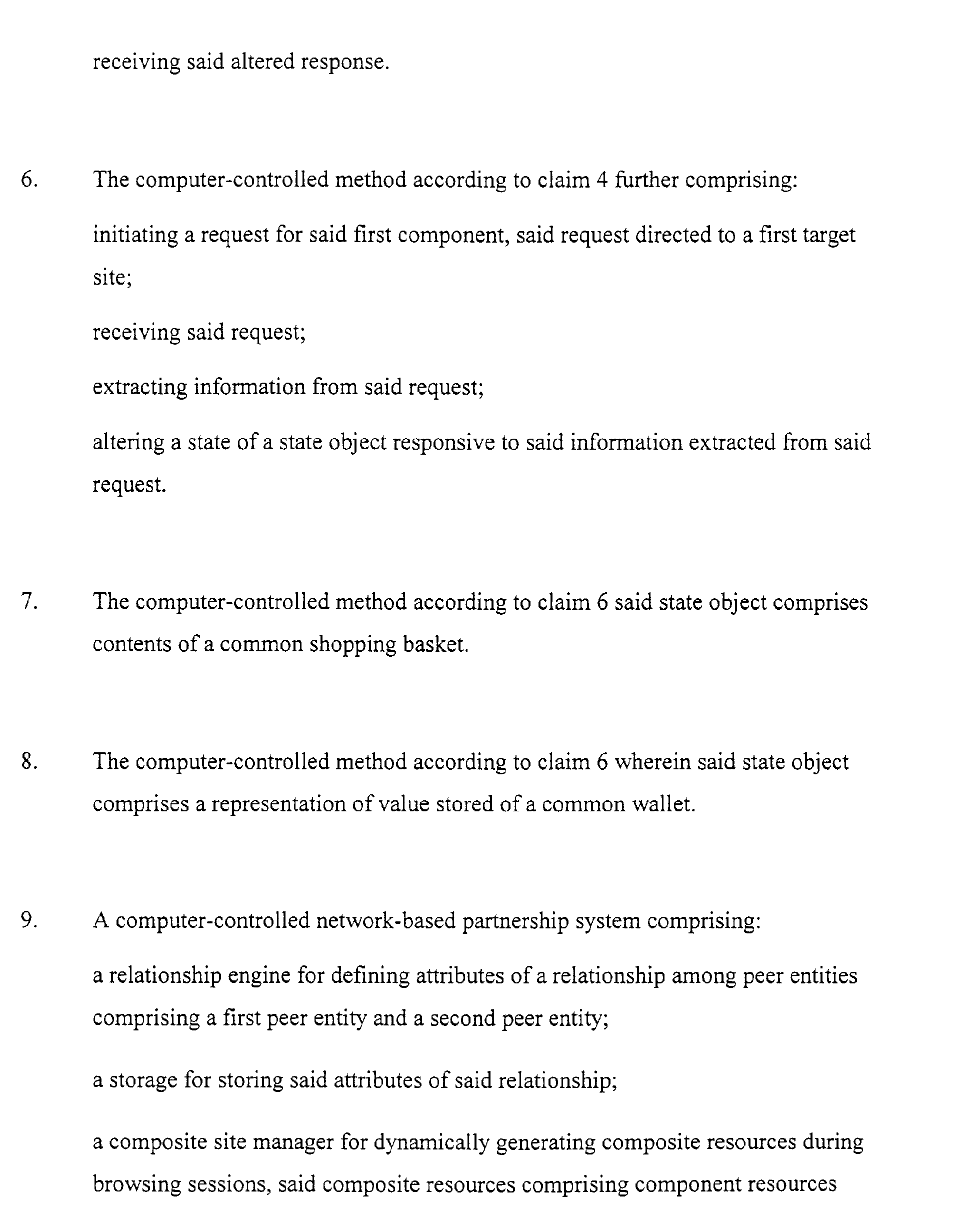

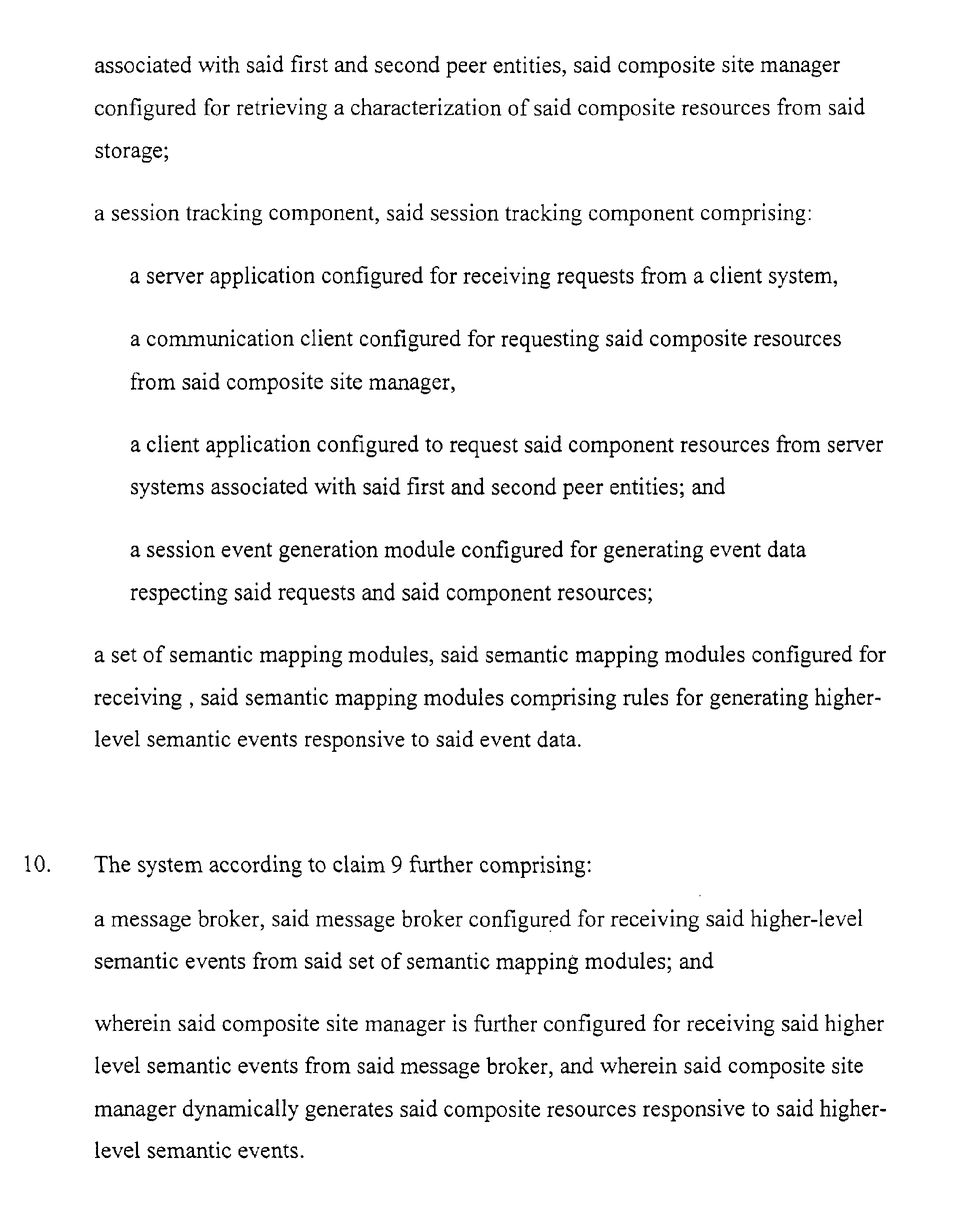

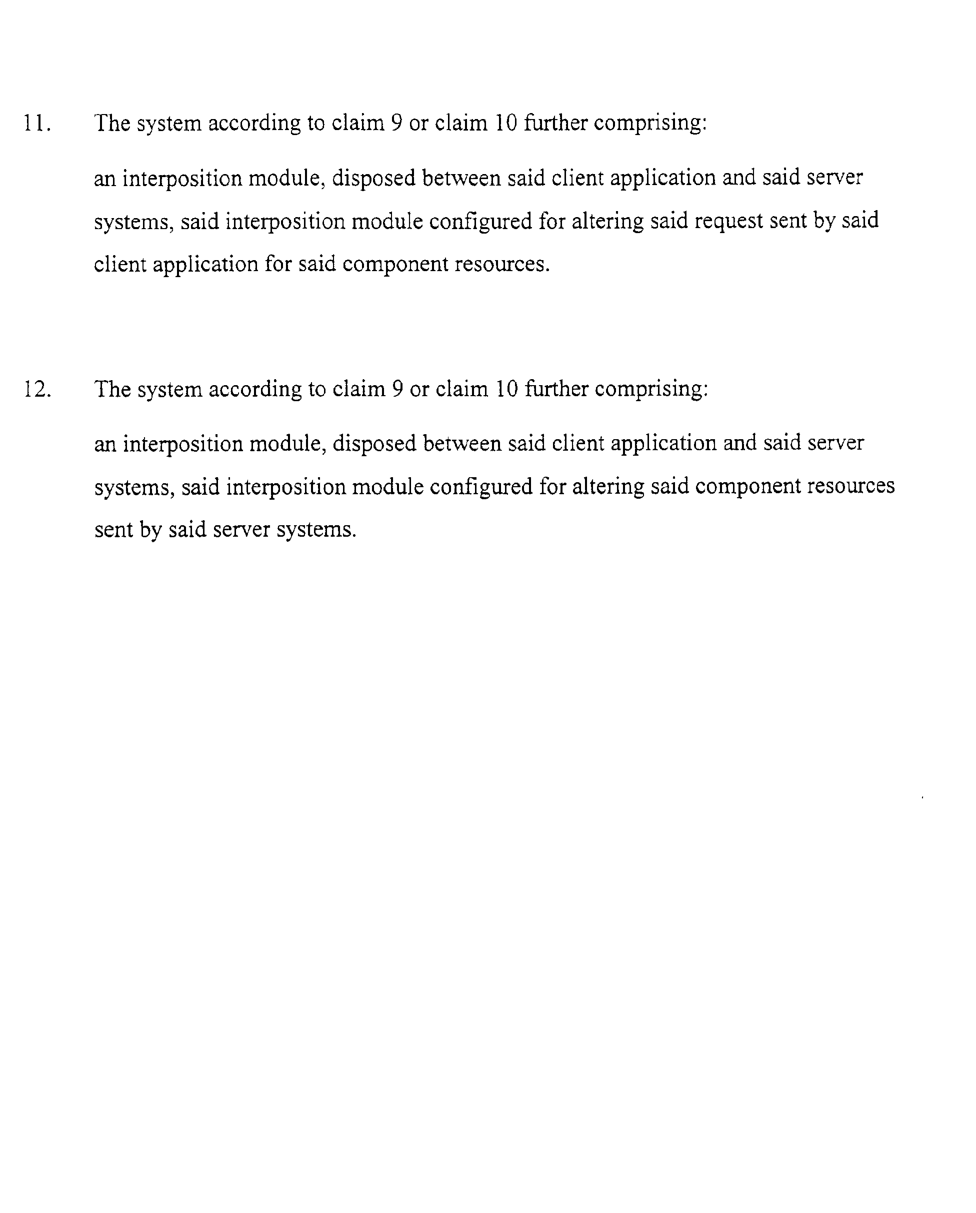

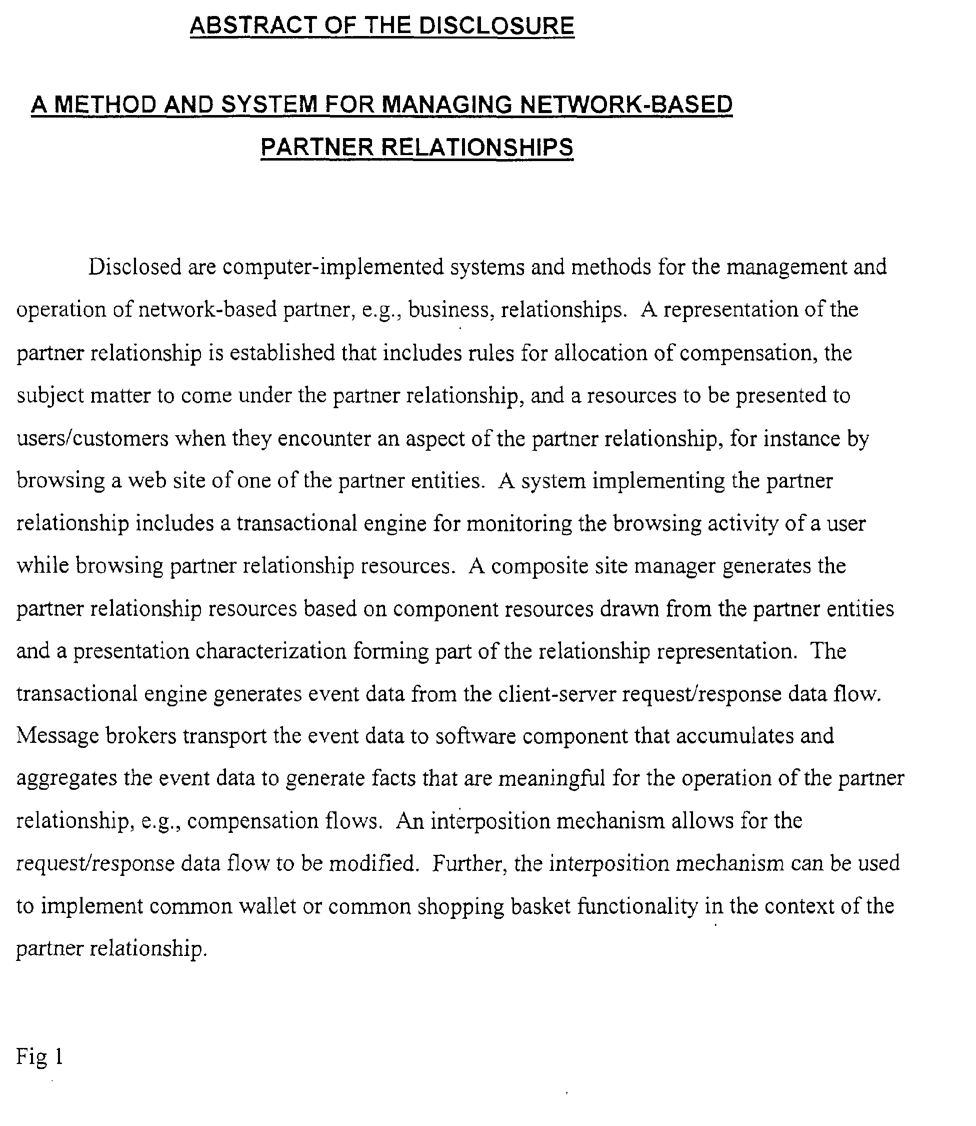

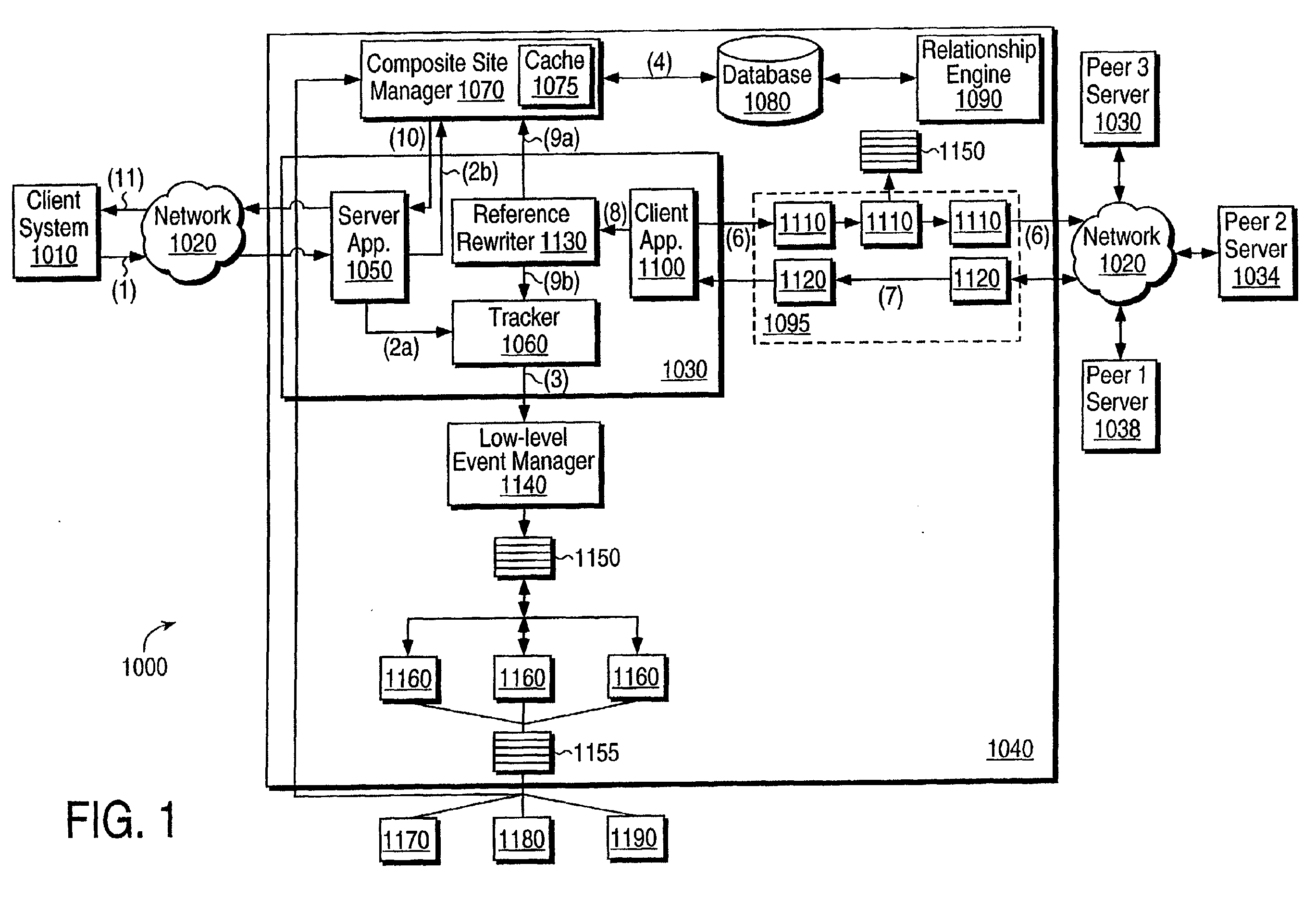

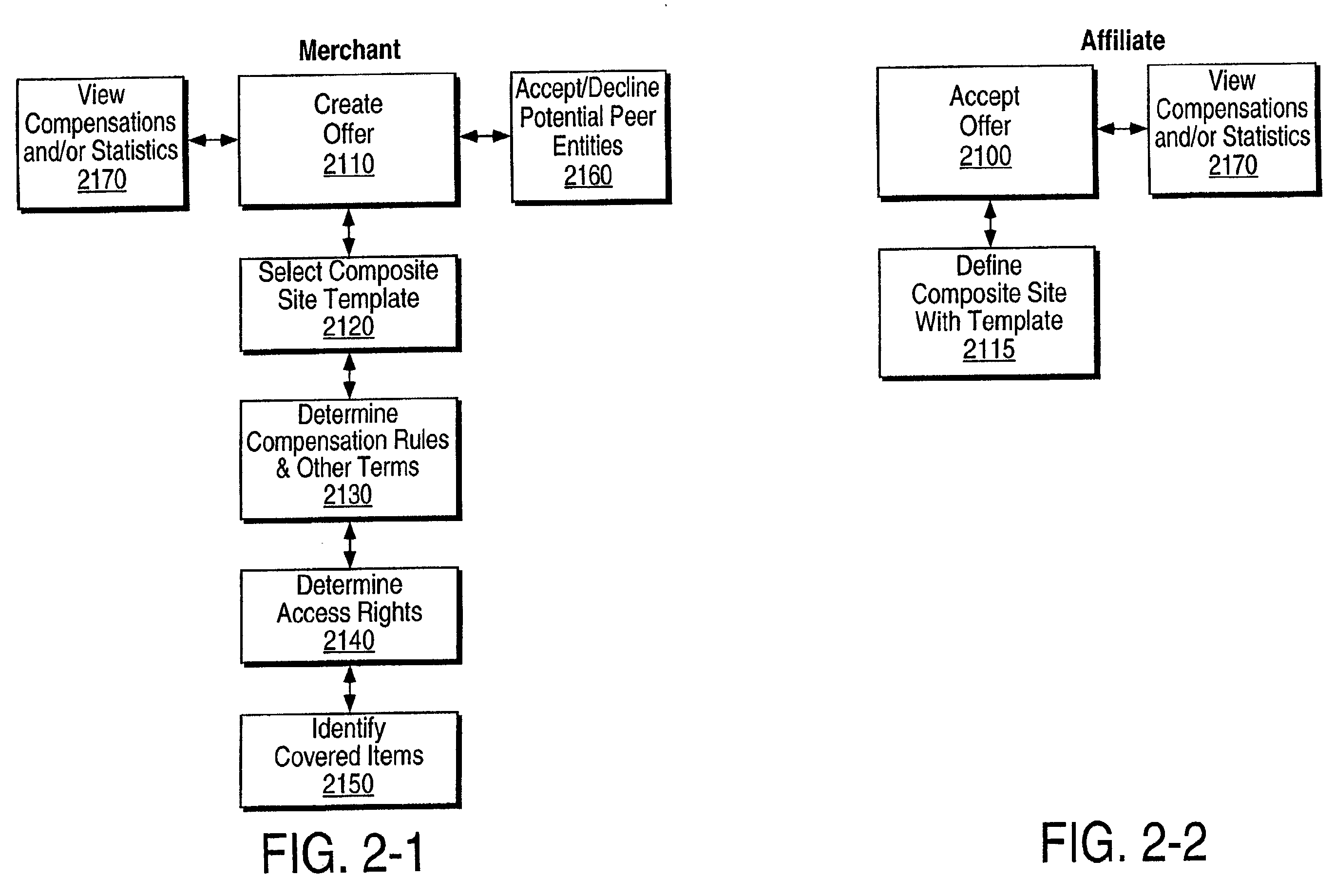

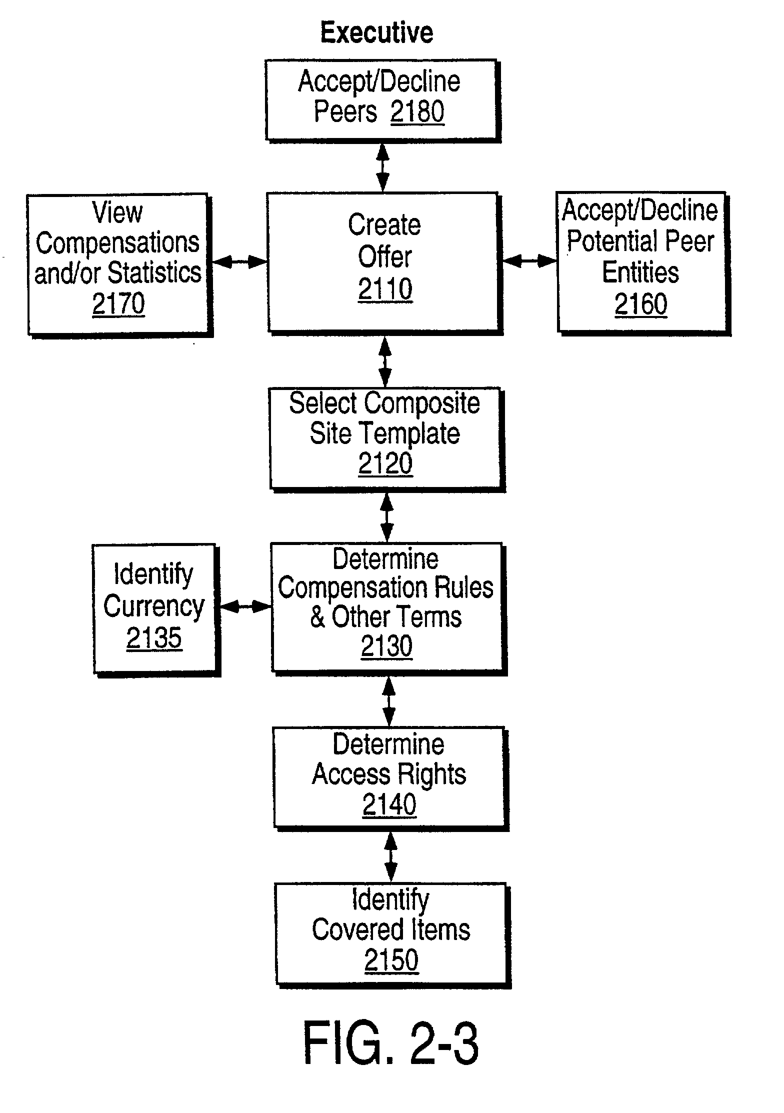

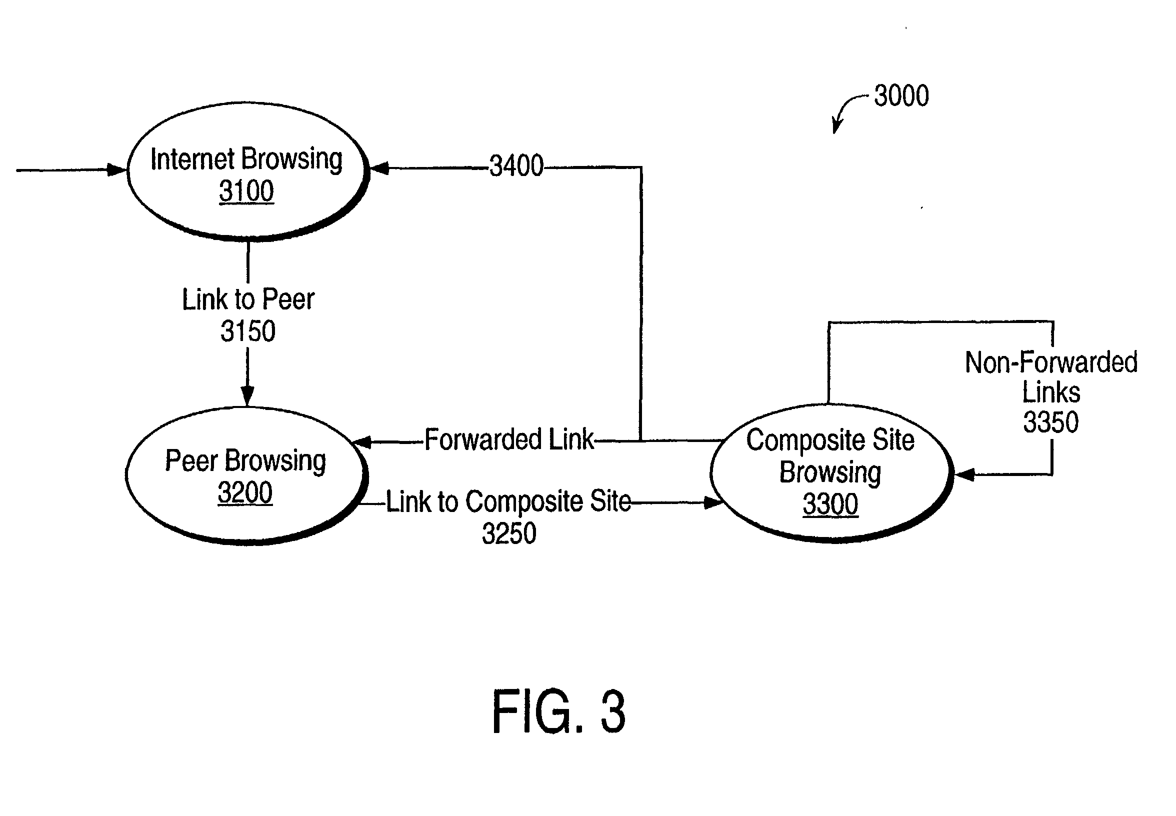

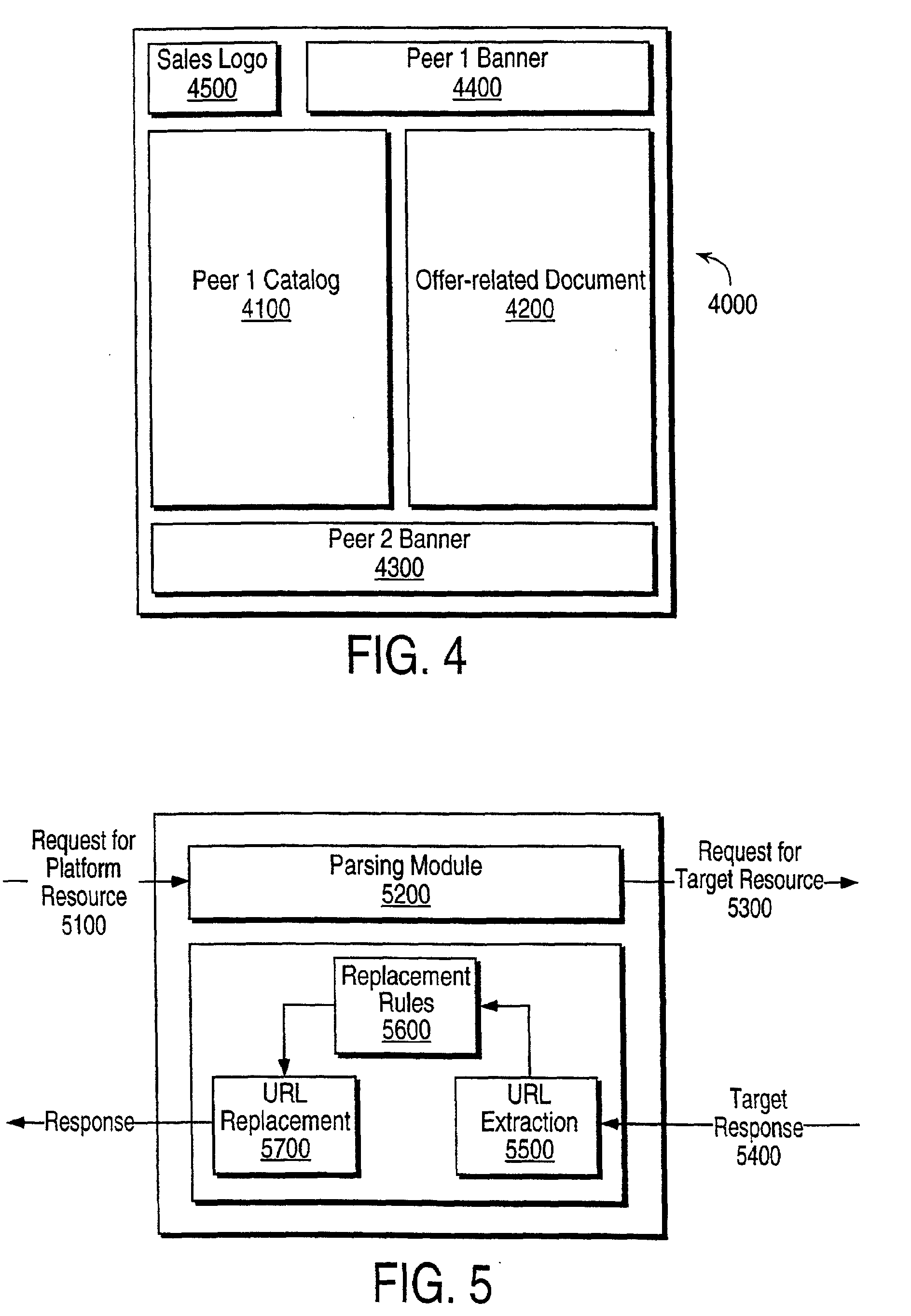

## Claims

1. A computer-controlled method of constructing a composite site resource, said computer-controlled method comprising:
receiving an identifier of a composite site;
retrieving a characterization of said composite site resource responsive to said identifier, said characterization comprising a set identifiers for a set of component resources;
communicating requests to retrieve said set of component resources based on said set of identifiers;
receiving said set of component resources;
assembling said component resources in accordance with said characterization for creating said composite site resource; and
returning said composite site resource.

2. The computer-controlled method according to claim 1 wherein assembling said resource comprises assembling a frameset, said component resources comprise identifiers of resources of frames of said frameset, and said method further comprises:
receiving requests said resources of frames of said frameset;
retrieving said resources of frames of said frameset; and
returning said resources of frames of said frameset.

3. The computer-controlled method according to claim 1 or claim 2 wherein retrieving a characterization of said composite site resource comprises:
submitting a query to a relational database for said characterization; and
transforming results from said query from a relational data model to an XML schema.

4. The computer-controlled method according to any of claims 1 to 3 wherein said characterization of said composite site resource is static.

5. The computer-controlled method according to claim 4 wherein said characterization of said composite site resource is associated with a relationship between a first peer entity and a second peer entity; said characterization of said composite site resource is predetermined by one of said first peer entity and said second peer entity, and providing requests for said component resources comprises:
providing a first request for a first component resource to a first sever system associated with said first peer entity; and
providing a second request for a second component resource to a second sever system associated with said second peer entity.

6. A computer-controlled method constructing a composite site resource, said computer-controlled method comprising:
receiving a request for a composite site resource, said request comprising an identifier of a composite site;
requesting a characterization said composite site associated with said identifier;
receiving identifiers of component resources of said composite site resource ;
requesting said component resources based upon said identifiers;
receiving and returning said component resources;
receiving said composite site resource; and
providing said composite site resource.

7. A computer-controlled method constructing a composite site resource, said computer-controlled method comprising:
receiving a request for a composite site resource from a first client system, said request received with a first server application, said request comprising an identifier of a composite site;
extracting said identifier of said composite site from said request, by said first server application;
communicating a message comprising said identifier of said composite site to a second server application for requesting said composite site comprising said resource;
retrieving a characterization of said composite site, said characterization retrieved by said second server application responsive to said identifier of said composite site;
retrieving a characterization of said composite site, said characterization retrieved by said second server application responsive to said identifier of said composite site;
identifying component resources from said characterization of said composite site,
providing to a second client identifiers of said component resources;
requesting said component resources, by said second client, and returning said component resources to said second server application;
assembling said component resources in accordance with said characterization of said composite site for creating said composite site resource;
returning said composite site resource to said first server application; and
returning said composite site resource to said first client system.

8. A computer-implemented system for constructing a composite site resource comprising:
a first server application, said first server application configured for receiving a request comprising an identifier of composite site, extracting said identifier, and providing a request for said composite site resource;
a composite site generation application, said composite site generation application configured for receiving said request for said composite site resource from, retrieving a characterization of said composite site based on said request, and providing requests for components of said composite site resource;
a first client application, said first client application configured for receiving said requests for components, said client application configured for retrieving said components and providing said components to said composite site generation application;
wherein, said composite site generation application assembles said components into said composite site resources in accordance with said characterization.

9. The system according to claim 8 further wherein:
said composite site generation application comprises:
a composite site object for representing a definition of the composite site;
a page object for defining a representation of the composite site; and
a layout object for providing an association between said components.
